# EUROPÄISCHE PATENTSCHRIFT

(11) **EP 4 005 943 B1**
(45) Veröffentlichungstag und Bekanntmachung des Hinweises auf die Patenterteilung: **09.08.2023**
(21) Anmeldenummer: 20210070.7
(22) Anmeldetag: 26.11.2020
(51) Int. Cl.: B65D 30/22, B65D 33/10, B65D 33/12

(54) **KUNSTSTOFFTASCHE UND VERWENDUNG EINER KUNSTSTOFFTASCHE**
PLASTIC BAG AND USE OF A PLASTIC BAG
SAC EN PLASTIQUE ET UTILISATION D'UN SAC EN PLASTIQUE

(43) Veröffentlichungstag der Anmeldung: 01.06.2022
(73) Patentinhaber: Papier-Mettler KG, 54497 Morbach (DE)
(72) Erfinder: Donner, Georg, 54497 Morbach (DE); Schmitt, Philipp, 54470 Lieser (DE)
(74) Vertreter: Metten, Karl-Heinz

(56) Entgegenhaltungen:
- US-A1- 2010 270 342
- US-A1- 2015 246 751

## Beschreibung

Die vorliegende Erfindung betrifft eine wiederverwendbare Kunststofftasche mit Tascheninneneinschüben zur Aufnahme einer oder mehrerer Getränkeflaschen sowie eine erfindungsgemäße wiederverwendbare Kunststofftasche mit Tascheninneneinschüben und Halteschlaufen zur Aufnahme einer oder mehrerer Getränkeflaschen und die Verwendung der erfindungsgemäßen wiederverwendbare Kunststofftasche mit Tascheninneneinschüben zur Aufnahme einer oder mehrerer Getränkeflaschen.

Der Transport einzelner Getränkeflaschen, insbesondere mehrerer einzelner Getränkeflaschen unterschiedlicher Größe oder Fassungsvermögen, gestaltet sich immer noch als problematisch, vor allem wenn der Einkauf der Getränkeflaschen nicht geplant ist. Üblicherweise werden diese dann zum Transport in Rucksäcken oder normalen Beuteltaschen aus Baumwolle oder Kunststoff transportiert, wobei sich schon eine gleichmäßige Beladung bzw. Verteilung der Getränkeflaschen als trickreich erweist. Spätestens beim Transport selber und der damit einhergehenden Bewegung, lassen sich ein Verrutschen der einzelnen Getränkeflaschen und ein Zusammenstoßen nicht vermeiden, was insbesondere bei Glasflaschen zu Transportschäden, wie Glasbruch, führen kann. Meistens sind besagte Beuteltaschen oder Rucksäcke auch nicht für das Gewicht mehrerer Getränkeflaschen ausgelegt, sodass es zu Rissen im Gewebe oder Abreißen von Henkeln kommen kann. Auch ein zwischenzeitliches sicheres Abstellen eines mit Getränkeflaschen beladenen Rucksacks oder Beutels ist meist nicht möglich, ohne dass es zum Umkippen der Flaschen, insbesondere durch die ungleichmäßige Beladung, kommt.

Aus dem Stand der Technik sind Systeme speziell für den Transport von Getränkeflaschen bekannt.

Die EP 0 311 824 A2 offenbart eine auffaltbare Tragetasche für Flaschen aus Papier begrenzt durch einen Boden und eine Ummantelung, wobei durch das Auffalten der Tragetasche ein Aufnahmeraum mit Facheinteilung entsteht.

Die DE 299 02 399 U1 zeigt einen Transportbeutel für Flaschen auf Basis eines traditionellen Plastikbeutels mit einem unterteilten Innenraum zum Einstecken der Flaschen.

Die US 2015/246751 A1 zeigt eine wiederverwendbare Tasche, umfassend eine Vorderwand und eine gegenüberliegende Rückwand, jeweils mit einer Außenfläche, einer Innenfläche, einer ersten Seitenkante, einer zweiten Seitenkante, einer Bodenkante und einer Oberkante, eine erste Seitenwand und eine zweite Seitenwand mit jeweils einer Außenfläche, einer Innenfläche, einer ersten Seitenkante einer zweiten Seitenkante, einer Unterkante und einer Oberkante, wobei die erste Seitenkante der ersten Seitenwand mit der zweiten Seitenkante der Rückwand verbunden ist und die zweite Seitenkante der ersten Seitenwand mit der ersten Seitenkante der Vorderwand verbunden ist, wobei die erste Seitenkante der zweiten Seitenwand mit der zweiten Seitenkante der Vorderwand verbunden ist und die zweite Seitenkante der zweiten Seitenwand mit der ersten Seitenkante der Rückwand verbunden ist. Die Taschen der US 2015/246751 A1 umfassen ferner eine Bodenplatte mit einer äußeren Oberfläche, einer inneren Oberfläche, einer ersten Kante, die mit der unteren Kante der vorderen Platte verbunden ist, einer zweiten Kante, die mit der unteren Kante der ersten Seitenplatte verbunden ist, einer dritten Kante, die mit der unteren Kante der hinteren Platte verbunden ist, und einer vierten Kante, die mit der unteren Kante der zweiten Seitenplatte verbunden ist, wobei die Vorderwand, die Rückwand, die erste Seitenwand, die zweite Seitenwand, die Bodenwand aus einem Vliesmaterial bestehen. Auch haben die Taschen der US 2015/246751 A1 einen Hohlraum, der durch die Bodenwand, die Vorderwand, die Rückwand, die erste Seitenwand und die zweite Seitenwand gebildet wird, aufzuweisen, wobei der Hohlraum ein offenes Ende in der Nähe der Oberkanten der Vorderwand, der Rückwand, der ersten Seitenwand und der zweiten Seitenwand aufweist. Diese Taschen sind zudem ausgestattet mit einer ersten Kanalwand mit einer ersten Kante, die mit der Innenfläche der ersten Seitenwand verbunden ist, und einer zweiten Kante, die mit der Innenfläche der zweiten Seitenwand verbunden ist, wobei die erste Kanalwand im Wesentlichen senkrecht zu der ersten Seitenwand ist, sowie mit einer zweiten Kanalwand mit einer ersten Kante, die mit der Innenfläche der ersten Seitenwand verbunden ist, und einer zweiten Kante, die mit der Innenfläche der zweiten Seitenwand verbunden ist, wobei die zweite Kanalwand im Wesentlichen parallel zu der ersten Kanalwand ist und wobei die erste Kanalwand und die zweite Kanalwand einen Kanal in dem Hohlraum bilden. Die Taschen der US 2015/246751 A1 weisen außerdem eine erste Trennwand mit einer ersten Kante, die mit der Innenfläche der Vorderwand verbunden ist, und einer zweiten Kante, die mit der ersten Kanalwand verbunden ist, auf, wobei der erste Teiler, ein Teil der ersten Kanalwand, ein Teil die ersten Seitenwand und ein Teil der Vorderwand ein erstes Fach bilden, sowie eine zweite Trennwand mit einer ersten Kante, die mit der Innenfläche der Rückwand verbunden ist, und einer zweiten Kante, die mit der zweiten Kanalwand verbunden ist, wobei die zweite Trennwand, ein Teil der zweiten Kanalwand, ein Teil der ersten Seitenwand und ein Teil der Rückwand ein zweites Fach bilden. Eine solche wiederverwendbare Tasche soll Fächer für wiederverwertbare Einkaufstaschen sowie gekaufte Waren bereitstellen. Eine weitere Tasche ist aus der US2010/270342A1 bekannt.

Die aus dem Stand der Technik bekannten speziellen Tragetaschen oder Transportbeutel für Flaschen weisen jedoch den entscheidenden Nachteil auf, dass die Unterteilung des Innenraums zwangsweise durch die Aufteilung in einzelne Kammern für die Getränkeflaschen vorgegeben ist. Solch eine Tragetasche speziell für Flaschen weist einen sehr limitierten Einsatzbereich auf, ein Nutzer würde diese kaum für einen spontanen Einkauf, insbesondere von nicht ausschließlich Getränkeflaschen, mitführen. Einige Systeme aus dem Stand der Technik, insbesondere die aus Papier, sind auch nicht für den Mehrfachgebrauch ausgelegt. Der vorliegenden Erfindung lag daher die Aufgabe zugrunde, eine wiederverwendbare Kunststofftasche zur Aufnahme einer oder mehrerer Getränkeflaschen zur Verfügung zu stellen, die nicht mit den Nachteilen der Tragetaschen oder Transportbeutel des Stands der Technik behaftet und die insbesondere für den wiederholten zuverlässigen Transport auch schwerer Glasflaschen geeignet ist ohne Beeinträchtigung des Materials zu erleiden und die sich zudem auf einfache und kostengünstige Weise in maschineller Serienfertigung herstellen lässt.

Demgemäß wurde eine Kunststofftasche gemäß Anspruch 1 mit einem Taschenboden und einer gegenüberliegenden Taschenöffnung gefunden, umfassend eine Vorderwand und eine Rückwand, jeweils mit einem ersten Seitenrand und einem gegenüberliegenden zweiten Seitenrand sowie einem Öffnungsrand und einem Bodenrand, wobei die Vorderwand und die Rückwand im Bereich ihrer ersten und zweiten Seitenränder und ihrer Bodenränder mindestens abschnittsweise, insbesondere mittels Verschweißen, unter Ausbildung von gegenüberliegenden ersten und zweiten Taschenrändern sowie einem Taschenbodenrand miteinander verbunden sind, wobei die Vorderwand und/oder die Rückwand innenseitig mindestens eine Kunststofffolienlage aufweist, die sich vom oder beabstandet vom ersten Seitenrand in Richtung des oder bis zum gegenüberliegenden zweiten Seitenrand sowie vom Bodenrand oder beabstandet vom Bodenrand in Richtung des oder bis zum Öffnungsrand erstreckt, wobei die Kunststofffolienlage der Vorderwand und/ oder der Rückwand über mindestens zwei, insbesondere drei oder vier, jeweils voneinander beabstandete, insbesondere im Wesentlichen parallel verlaufende, sich beabstandet vom Bodenrand in Richtung des oder bis zum Öffnungsrand erstreckende Schweiß- oder Klebeareale, insbesondere Schweißnähte, mindestens abschnittsweise mit der Innenseite von Vorderwand bzw. Rückwand verbunden ist unter Ausbildung von zur Taschenöffnung hin offenen

Tascheninneneinschüben, jeweils eingerichtet und ausgelegt zur Aufnahme einer oder mehrerer Getränkeflaschen, wobei die Vorderwand mehrlagig ausgestaltet ist und wobei die Kunststofffolienlage über die Schweiß- oder Klebeareale ausschließlich mit der innenliegenden Lage der mehrlagigen Vorderwand verbunden ist und/oder wobei die Rückwand mehrlagig ausgestaltet ist und wobei die Kunststofffolienlage über die Schweiß- oder Klebeareale ausschließlich mit der innenliegenden Lage der mehrlagigen Rückwand verbunden ist.

In einer bevorzugten Ausführungsform der erfindungsgemäßen Kunststofftasche stellen dar oder umfassen die Schweiß- oder Klebeareale punktuelle oder durchgehende Verschweißungen oder Verklebungen der Vorderwand bzw. Rückwand mit den zugehörigen Kunststofffolienlagen, insbesondere durchgehende Schweißnähte. Diese Ausführungsform hat den Vorteil, dass die Kunststofffolienlagen, wenn die Tascheninneneinschübe nicht mit einer Flasche oder dergleichen befüllt sind, plan an der Vorder- bzw. Rückwand anliegen und der Tascheninnenraum in herkömmlicher Weise uneingeschränkt mit z.B. Lebensmitteln befüllt werden kann. In einer alternativen Ausgestaltung der erfindungsgemäßen Kunststofffolientasche liegen anstelle die Schweiß- oder Klebeareale weitere Kunststofffolienlagen in Form von Seitenwänden vor, die sich von der Vorder- bzw. Rückwand bis zur bereits beschriebenen Kunststofffolienlage erstrecken. Auf diese Weise können größere Tascheninneneinschübe zur Aufnahme größerer Getränkeflaschen bzw. von Getränkeflaschen mit einem größeren Fassungsvermögen generiert werden.

Die vorangehend geschilderte erfindungsgemäße Ausführungsform einer Kunststofftasche bietet Tascheninneneinschübe für die Aufnahme einer oder mehrerer Getränkeflaschen, sodass diese innerhalb der Kunststofftasche sicher an ihrem Platz gehalten werden und nicht umfallen, verrutschen oder zusammenstoßen, wobei die Tascheninneneinschübe auch ungenutzt bleiben können und die erfindungsgemäße Kunststofftasche so für den Transport anderer Dinge, wie beispielsweise Lebensmittel genutzt werden kann. Im ungenutzten Fall der Tascheninneneinschübe liegen diese jedoch nicht, wie in den Tragetaschen speziell für Getränkefalschen, als Kammern in der Tasche vor, sondern liegen plan an der Innenseite der Vorderwand und/oder Rückwand an, sodass diese nicht bei der Beladung der Kunststofftasche mit anderen Dingen stören.

In einer bevorzugten Ausführungsform der vorangehend spezifizierten Kunststofftragetasche kann dabei vorgesehen sein, dass die Tascheninneneinschübe zum Taschenboden hin offen sind. Im Falle dieser Ausführungsform schmiegen sich die Tascheninneneinschübe zum einen besonders gut an die Vorderwand und/oder Rückwand an, zum anderen kann die erfindungsgemäße Kunststofftasche so noch einfacher und kostengünstiger hergestellt werden aufgrund des Fehlens einer zusätzlichen Schweiß- oder Klebenaht.

In einer zweckmäßigen Ausführungsform der erfindungsgemäßen Kunststofftasche sind die Vorderwand und die Rückwand entlang ihrer ersten Seitenränder über eine erste Seitenwand verbunden und entlang ihrer zweiten Seitenränder über eine zweite Seitenwand miteinander verbunden. Alternativ sind auch Ausgestaltungen denkbar, bei denen nur die ersten Seitenränder oder nur die zweiten Seitenränder über eine Seitenwand miteinander verbunden sind, bevorzugt ist jedoch die Ausführungsform mit zwei Seitenwänden. Durch die zusätzlichen Seitenwände kann ein größerer Innenraum der erfindungsgemäßen Kunststofftasche generiert werden, was insbesondere auch den Transport großer Getränkeflaschen bzw. Getränkeflaschen mit einem größeren Fassungsvermögen ermöglicht. Weiterhin ist durch das Vorhandensein von Seitenwänden auch der Transport zusätzlicher Ware, wie beispielsweise Lebensmittel, im Innenraum zwischen den Getränkeflaschen in den Tascheninneneinschüben denkbar.

Um einen größeren Innenraum und so ein größeres Fassungsvermögen der erfindungsgemäßen Kunststofftasche zu generieren, haben sich ebenfalls solche Ausführungsformen der erfindungsgemäßen Kunststofftasche als geeignet erwiesen, bei denen der Taschenboden eine Bodenfalte aufweist, wobei sich von der Bodenfalte bis zur Vorderwand ein erster Bodenfaltenabschnitt erstreckt und wobei sich von der Bodenfalte bis zur Rückwand ein zweiter Bodenfaltenabschnitt erstreckt. Die hier beschriebene Ausführungsform eignet sich besonders gut, um während des Transports abgestellt werden zu können, ohne dass es zu einem Umfallen oder Umkippen der Getränkeflaschen im Innenraum der erfindungsgemä-βen Kunststofftasche kommt. Auch ist in der so beschriebenen Ausgestaltung der erfindungsgemäßen Kunststofftasche eine gleichmäßige Gewichtsverteilung des Transportguts, insbesondere der Getränkefalschen, innerhalb der Kunststofftasche besonders gut möglich.

Für den stabilen Transport hat es sich ebenfalls als zweckmäßig erwiesen, wenn die Vorderwand oder die Rückwand, insbesondere sowohl die Vorder- als auch und die Rückwand, im Bereich der Öffnungsränder innen- oder außenseitig zumindest abschnittsweise einen Saum aufweisen. Für einen optisch ansprechenderen Eindruck liegt der zumindest abschnittsweise Saum an Vorder- oder Rückwand, insbesondere sowohl an Vorder- als auch Rückwand, innenseitig vor. Dabei haben sich vor allem solche Ausführungsformen der erfindungsgemäßen Kunststofftasche als gut geeignet erwiesen, bei denen sich der Saum der Vorderwand oder der Saum der Rückwand, insbesondere sowohl der Saum der Vorder- als auch der Rückwand, jeweils vom ersten Seitenrand der Vorder- bzw. der Rückwand bis zum gegenüberliegenden zweiten Seitenrand der Vorder- bzw. der Rückwand erstreckt.

Dabei sind solche Ausführungsformen sehr zweckmäßig, bei denen der Saum der Vorderwand beabstandet von deren Öffnungsrand entlang einer Erstreckung von oder beabstandet von dem ersten Seitenrand in Richtung des oder bis zum zweiten Seitenrand mit der Vorderwand verbunden, insbesondere verschweißt oder verklebt, ist, insbesondere mit einer kontinuierlichen Längsschweißung. Alternativ oder zusätzlich ist auch der Saum der Rückwand beabstandet von deren Öffnungsrand entlang einer Erstreckung von oder beabstandet von dem ersten Seitenrand in Richtung des oder bis zum zweiten Seitenrand mit der Rückwand verbunden, insbesondere verschweißt oder verklebt, insbesondere mit einer kontinuierlichen Längsschweißung. Es sind sowohl für den Saum der Vorder- als auch der Rückwand auch Ausgestaltungen denkbar, bei denen sowohl eine Verschweißung und eine Verklebung vorliegen.

In allen vorangehend erläuterten Ausführungsformen der erfindungsgemäßen Kunststofftasche, die einen Saum aufweisen, sind solche Ausgestaltungen bevorzugt, bei denen der Saum der Vorder- und/oder der Rückwand als Fortsetzungsabschnitt der jeweiligen Wand vorliegt und mittels ein- oder mehrmaligem Umschlagen dieses Fortsetzungsabschnitts generiert wird.

Es hat sich als besonders zweckmäßig erwiesen, insbesondere im Hinblick auf eine einfache unkomplizierte Herstellung der erfindungsgemäßen Kunststofftaschen, wenn diese einstückig ausgebildet sind.

Die der Erfindung zugrunde liegende Aufgabe wird weiterhin gelöst durch eine bereits beschriebene erfindungsgemäße Kunststofftasche, die ferner mindestens eine mit der Vorderwand oder mindestens eine mit der Rückwand verbundene Halteschlaufe mit jeweils einem ersten und einem zweiten Anbindungsbereich umfasst, vorzugsweise sowohl eine mit der Vorderwand- als auch eine mit der Rückwand verbundene Halteschlaufe. Dabei hat es sich als besonders gut geeignet erwiesen, wenn die mit der Vorderwand und die mit der Rückwand verbundene Halteschlaufe jeweils in ihren ersten und zweiten Anbindungsbereichen im Bereich des Saums der Vorder- bzw. Rückwand verschweißt oder verklebt oder sowohl verschweißt und verklebt sind. Zum einen ist die beschriebene Ausführungsform der erfindungsgemäßen Kunststofftasche mit den Halteschlaufen einfacher zu transportieren, weiterhin zeigen die so angebrachten Halteschlaufen aber im Vergleich zu herkömmlichen Tragebeuteln auch eine verbesserte Belastbarkeit und Tragefestigkeit aufgrund des verringerten mechanischen Verschleißes insbesondere bei mehrfacher Nutzung der erfindungsgemäßen Kunststofftasche.

In einer bevorzugten Ausführungsform der vorangehend spezifizierten Kunststofftragetasche mit Halteschlaufen kann dabei vorgesehen sein, dass die mit der Vorderwand über ihre ersten und zweiten Anbindungsbereiche verbundene Halteschlaufe und/oder die mit der Rückwand über ihre ersten und zweiten Anbindungsbereich verbundene Halteschlaufe im Bereich vom jeweiligen ersten bis zum zweiten Anbindungsbereich zumindest abschnittsweise einen ersten flexiblen schlauchförmigen Hohlkörper oder einen ein- oder mehrlagigen, keinen Hohlkörper bildenden Materialstreifen, insbesondere Kunststoffmaterialstreifen, aufweist, der zumindest abschnittsweise oder im Wesentlichen vollständig von einem zweiten flexiblen schlauchförmigen Hohlkörper umhüllt ist.

Sowohl für die Ausführungsform ohne Halteschlaufen, als auch die mit Halteschlaufen hat es sich als zweckmäßig erwiesen, wenn die mindestens eine Kunststofffolienlage mindestens abschnittsweise mit dem ersten Seitenrand und/oder dem zweiten Seitenrand, insbesondere mittels Verschweißen, verbunden ist.

Insbesondere durch die Kombination der zuvor beschriebenen Merkmale, die den verstärkten Saum ausbilden, mit den Merkmalen der Halteschlaufe wird eine besonders robuste und belastbare Kunststofftragetasche erhalten.

Für einen verbesserten selbstständigen Stand der erfindungsgemäßen Kunststofftasche und zum Einsparen von Material hat es sich ebenfalls als vorteilhaft erwiesen, wenn die Vorderwand und die Rückwand am Übergang ihrer Bodenränder zu den Taschenrändern, insbesondere dreiecksförmige, Aussparungen aufweisen.

Besonders zweckmäßig sind erfindungsgemäße Kunststofftaschen, bei denen die mindestens eine Kunststofffolienlage in Richtung von dem Bodenrand zum Öffnungsrand der Vorderwand eine Erstreckung aufweist, die bis 80%, insbesondere 40 bis 60%, der Erstreckung der Vorderwand von dem Bodenrand zum Öffnungsrand entspricht. Alternativ oder zusätzlich, bevorzugt jedoch zusätzlich, ist es zweckmäßig, wenn auch die mindestens eine Kunststofffolienlage an der Rückwand in Richtung von dem Bodenrand zum Öffnungsrand der Rückwand eine Erstreckung aufweist, die 30 bis 80%, insbesondere 40 bis 60%, der Erstreckung der Rückwand von dem Bodenrand zum Öffnungsrand entspricht.

Für ein kompaktes Design und einen minimalen Materialverbrauch hat es sich ebenfalls als zweckmäßig erwiesen, wenn die bodenseitige Öffnung des Tascheninneneinschubs einen Abstand bis zum Taschenboden aufweist, der 5 bis 30%, insbesondere 10 bis 20%, der Erstreckung der Vorderwand bzw. der Rückwand von dem Bodenrand zum Öffnungsrand entspricht.

Dabei ist es bevorzugt, wenn die mindestens eine Kunststofffolienlage in Richtung vom ersten bis zum zweiten Seitenrand der Vorderwand eine Erstreckung aufweist, die der Erstreckung der Vorderwand vom ersten bis zum zweiten Seitenrand entspricht. Alternativ oder zusätzlich, bevorzugt jedoch zusätzlich, ist es zweckmäßig wenn auch die mindestens eine Kunststofffolienlage der Rückwand in Richtung vom ersten bis zum zweiten Seitenrand der Rückwand eine Erstreckung aufweist, die der Erstreckung der Rückwand vom ersten bis zum zweiten Seitenrand entspricht.

Bevorzugt sind sämtliche Ausführungsformen der erfindungsgemäßen Kunststofftasche, bei denen die Vorderwand oder die Rückwand oder die mindestens eine Kunststofffolienlage oder gegebenenfalls die Seitenwände der Kunststofftasche oder der Taschenboden oder der Saum von Vorder- und/oder Rückwand oder die Halteschlaufen, im Wesentlichen auf thermoplastischen Kunststoffen basieren oder hieraus gefertigt sind. Besonders bevorzugt sind die Ausgestaltungen der erfindungsgemäßen Kunststofftasche, bei denen sämtliche der eben aufgezählten Komponenten oder zumindest ein Großteil der aufgezählten Komponenten auf thermoplastischen Kunststoffen basieren oder hieraus gefertigt sind. Es sind aber auch jegliche Kombinationen mit anderen Textilien, wie Naturfasern oder Chemiefasern, denkbar. Bevorzugt sind jedoch thermoplastischen Kunststoffe, wobei Polyolefinen bevorzugt sind, insbesondere Polyethylen und/oder Polyester.

Herkömmliche Taschen auf Kunststoffbasis weisen den Nachteil auf, dass diese in der Umwelt schwer abbaubar sind. Die erfindungsgemäßen Kunststofftaschen bestehen oder umfassen daher im Wesentlichen recyclefähige Materialen. Dabei ist es von Vorteil wenn durchgängig ein einheitliches Kunststoffmaterial verwendet wird, um einen sortenreinen Kunststoff zum Recyceln zu erhalten.

In einer besonders zweckmäßigen Ausführungsform der erfindungsgemäßen Kunststofftasche kann vorgesehen sein, dass die Kunststofffolienlage der Vorderwand sich vom ersten Seitenrand bis zum gegenüberliegenden zweiten Seitenrand erstreckt,
wobei der Abstand des Schweiß- oder Klebeareals, insbesondere in Form einer Schweißnaht, das bzw. die benachbart zum ersten Seitenrand angeordnet ist, zu diesem ersten Seitenrand kleiner ist als der Abstand mindestens eines Paares, insbesondere sämtlicher Paare, an einander benachbarten Schweiß- oder Klebearealen und/oder, insbesondere und,
wobei der Abstand des Schweiß- oder Klebeareals, insbesondere in Form einer Schweißnaht, das bzw. die benachbart zum zweiten Seitenrand angeordnet ist, zu diesem zweiten Seitenrand kleiner ist als der Abstand mindestens eines Paares, insbesondere sämtlicher Paare, an einander benachbarten Schweiß- oder Klebearealen
und/oder, insbesondere und, dass die Kunststofffolienlage der Rückwand sich vom ersten Seitenrand bis zum gegenüberliegenden zweiten Seitenrand erstreckt,
wobei der Abstand des Schweiß- oder Klebeareals, insbesondere in Form einer Schweißnaht, das bzw. die benachbart zum ersten Seitenrand angeordnet ist, zu diesem ersten Seitenrand kleiner ist als der Abstand mindestens eines Paares, insbesondere sämtlicher Paare, an einander benachbarten Schweiß- oder Klebearealen und/oder, insbesondere und,
wobei der Abstand des Schweiß- oder Klebeareals, insbesondere in Form einer Schweißnaht, das bzw. die benachbart zum zweiten Seitenrand angeordnet ist, zu diesem zweiten Seitenrand kleiner ist als der Abstand mindestens eines Paares, insbesondere sämtlicher Paare, an einander benachbarten Schweiß- oder Klebearealen.

Die vorangehend geschilderte Ausführungsform führt zu Tascheninneneinschüben benachbart zu den Seitenrändern, die kleiner sind als die sich anschließenden, innenliegenden Tascheninneneinschübe. Sie können für die sichere, ortsgebundene Aufnahme kleinteiliger, insbesondere länglicher, Gegenstände verwendet werden, können aber auch anders als die innenliegenden breiteren Tascheninneneinschübe, unbenutzt bleiben, um so die Befüllung der übrigen Tascheninneneinschübe zu erleichtern, insbesondere wenn Tascheninneneinschübe innenseitig zur Vorderwand und innenseitig zur Rückwand zugleich mit Flaschen zu befüllen sind.

In einer alternativen Ausführungsform der erfindungsgemäßen Kunststofftasche kann vorgesehen sein, dass die Kunststofffolienlage der Vorderwand sich beabstandet vom ersten Seitenrand in Richtung des, jedoch nicht bis zum gegenüberliegenden zweiten Seitenrand erstreckt,
wobei der Abstand des Schweiß- oder Klebeareals, insbesondere in Form einer Schweißnaht, das bzw. die benachbart zum ersten Seitenrand angeordnet ist, zu diesem ersten Seitenrand kleiner ist als der Abstand mindestens eines Paares, insbesondere sämtlicher Paare, an einander benachbarten Schweiß- oder Klebearealen und/oder, insbesondere und,
wobei der Abstand des Schweiß- oder Klebeareals, insbesondere in Form einer Schweißnaht, das bzw. die benachbart zum zweiten Seitenrand angeordnet ist, zu diesem zweiten Seitenrand kleiner ist als der Abstand mindestens eines Paares, insbesondere sämtlicher Paare, an einander benachbarten Schweiß- oder Klebearealen
und/oder, insbesondere und, dass
die Kunststofffolienlage der Rückwand sich beabstandet vom ersten Seitenrand in Richtung des, jedoch nicht bis zum gegenüberliegenden zweiten Seitenrand erstreckt,
wobei der Abstand des Schweiß- oder Klebeareals, insbesondere in Form einer Schweißnaht, das bzw. die benachbart zum ersten Seitenrand angeordnet ist, zu diesem ersten Seitenrand kleiner ist als der Abstand mindestens eines Paares, insbesondere sämtlicher Paare, an einander benachbarten Schweiß- oder Klebearealen und/oder, insbesondere und,
wobei der Abstand des Schweiß- oder Klebeareals, insbesondere in Form einer Schweißnaht, das bzw. die benachbart zum zweiten Seitenrand angeordnet ist, zu diesem zweiten Seitenrand kleiner ist als der Abstand mindestens eines Paares, insbesondere sämtlicher Paare, an einander benachbarten Schweiß- oder Klebearealen.

Unter den beiden vorangehend genannten Ausführungsform einer erfindungsgemäßen Kunststofftasche sind solche besonders bevorzugt, bei denen in Bezug auf die Vorderwand der Abstand des Schweiß- oder Klebeareals, insbesondere in Form einer Schweißnaht, das benachbart zum ersten Seitenrand angeordnet ist, bis zu diesem ersten Seitenrand maximal 75 %, insbesondere maximal 50 %, des Abstands mindestens eines Paares an einander benachbarten Schweiß- oder Klebearealen, insbesondere des Abstands desjenigen Paares an einander benachbarten Schweiß- oder Klebearealen, das den kleinsten Abstand zueinander unter den Paaren an einander benachbarten Schweiß- oder Klebearealen aufweist, beträgt
und/oder, insbesondere und, bei denen
in Bezug auf die Vorderwand der Abstand des Schweiß- oder Klebeareals, insbesondere in Form einer Schweißnaht, das benachbart zum zweiten Seitenrand angeordnet ist, bis zu diesem zweiten Seitenrand maximal 75 %, insbesondere maximal 50 %, des Abstands mindestens eines Paares an einander benachbarten Schweiß- oder Klebearealen, insbesondere des Abstands desjenigen Paares an einander benachbarten Schweiß- oder Klebearealen, das den kleinsten Abstand zueinander unter den Paaren an einander benachbarten Schweiß- oder Klebearealen aufweist, beträgt.

Alternativ oder zusätzlich kann dabei vorgesehen sein, dass in Bezug auf die Rückwand der Abstand des Schweiß- oder Klebeareals, insbesondere in Form einer Schweißnaht, das bzw. die benachbart zum ersten Seitenrand angeordnet ist, bis zu diesem ersten Seitenrand maximal 75 %, insbesondere maximal 50 %, des Abstands mindestens eines Paares an einander benachbarten Schweiß- oder Klebearealen, insbesondere des Abstands desjenigen Paares an einander benachbarten Schweiß- oder Klebearealen, das den kleinsten Abstand zueinander unter den Paaren an einander benachbarten Schweiß- oder Klebearealen aufweist, beträgt und/oder, insbesondere und, dass in Bezug auf die Rückwand der Abstand des Schweiß- oder Klebeareals, insbesondere in Form einer Schweißnaht, das bzw. die benachbart zum zweiten Seitenrand angeordnet ist, bis zu diesem zweiten Seitenrand maximal 75 %, insbesondere maximal 50 %, des Abstands mindestens eines Paares an einander benachbarten Schweiß- oder Klebearealen, insbesondere des Abstands desjenigen Paares an einander benachbarten Schweiß- oder Klebearealen, das den kleinsten Abstand zueinander unter den Paaren an einander benachbarten Schweiß- oder Klebearealen aufweist, beträgt.

Unter den erfindungsgemäßen Kunststofftaschen sind solche besonders bevorzugt, bei denen in Bezug auf die Vorderwand der Abstand von mindestens zwei Paaren, insbesondere von sämtlichen Paaren, an einander benachbarten Schweiß- oder Klebearealen, insbesondere in Form von Schweißnähten, im Wesentlichen übereinstimmt und/oder bei denen in Bezug auf die Rückwand der Abstand von mindestens zwei Paaren, insbesondere von sämtlichen Paaren, an einander benachbarten Schweiß- oder Klebearealen im Wesentlichen übereinstimmt.

Der Abstand von einander benachbarten Schweiß- oder Klebearealen eines Paars an solchen Schweiß- oder Klebearealen, insbesondere von sämtlichen Paaren an einander benachbarten Schweiß- oder Klebearealen, liegt bevorzugt im Bereich von 8 bis 18 cm, besonders bevorzugt im Bereich von 10 bis 16 cm und insbesondere im Bereich von 12,0 bis 14,0 cm.

Besonders stabile und damit häufig wiederverwendbare erfindungsgemäße Kunststofftaschen erhält man auch dadurch, dass die Vorderwand doppellagig ausgestaltet ist und/oder, insbesondere und, dass die Rückwand doppellagig ausgestaltet ist. Bei diesen erfindungsgemäßen Kunststofftaschen sind solche besonders bevorzugt, bei denen die vorderwandseitige Kunststofffolienlage über die Schweißareale in Form von Schweißnähten ausschließlich mit der innenliegenden Lage der mehrlagigen Vorderwand verbunden vorliegen, wobei alternativ oder zusätzlich, insbesondere zusätzlich, vorgesehen sein kann, dass die rückwandseitige Kunststofffolienlage über die Schweißareale in Form von Schweißnähten ausschließlich mit der innenliegenden Lage der mehrlagigen Rückwand verbunden ist.

Die Kunststofffolienlage der Vorderwand und/oder, insbesondere und, die Kunststofffolie Lage der Rückwand umfassen bevorzugt LD-Polyethylen und sind insbesondere hieraus gebildet. Ferner sind solche Kunststofffolienlagen der Vorderwand und/oder, insbesondere und, der Rückwand mit einer durchschnittlichen, insbesondere absoluten, Dicke im Bereich von 30 bis 80 µm, insbesondere im Bereich von 35 bis 60 µm, besonders bevorzugt. Derartige Kunststofffolienlagen weisen regelmäßig eine hinreichende Dehnbarkeit auf und erlauben das Einfügen auch größerer Gegenstände, insbesondere Flaschen, in die Tascheninneneinschübe.

Die der Erfindung zu Grunde liegende Aufgabe wird ferner gelöst durch die Verwendung der erfindungsgemäßen Kunststofftasche zum Transport von Getränkeflaschen, insbesondere von Getränkeflaschen mit einem Fassungsvermögen von bis zu 2 Litern Flüssigkeit.

Mit der erfindungsgemäßen Kunststofftasche mit Tascheninneneinschüben, sowie der erfindungsgemäßen Kunststofftasche mit Tascheninneneinschüben und Halteschlaufen als auch der Verwendung der erfindungsgemäßen Kunststofftasche geht die überraschende Erkenntnis einher, dass einzelne oder mehrere Getränkeflaschen sicher transportiert werden können, ohne dass es zum Verrutschen, Umkippen oder Zusammenstoßen der einzelnen Getränkeflaschen innerhalb der Kunststofftasche kommt. Dabei ist auch ein sicheres Abstellen der Kunststofftasche während des Transports möglich. Die Kunststofftasche ist dabei einfach und kostengünstig in Serienfertigung herstellbar, wobei das Material wiederverwendbar, haltbar und extrem belastbar und reißfest ist. Dabei ist die erfindungsgemäße Kunststofftasche jedoch nicht nur auf den Transport von Getränkeflaschen limitiert: Sollten andere Güter, wie beispielsweise Lebensmittel, in der erfindungsgemäßen Kunststofftasche transportiert werden, sind die Tascheninneneinschübe dabei nicht störend oder gar im Weg, sondern schmiegen sich plan an die Innenseite der Vorder- bzw. Rückwand der Kunststofftasche an.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:
- Figur 1: eine schematische perspektivische Ansicht einer ersten Ausführungsform einer erfindungsgemäßen Kunststofftasche,
- Figur 2: eine schematische Draufsicht auf die Ausführungsform der erfindungsgemäßen Kunststofftasche gemäß Figur 1,
- Figur 3: eine schematische Draufsicht einer alternativen Ausführungsform der erfindungsgemäßen Kunststofftasche,
- Figur 4: eine schematische perspektivische Ansicht einer alternativen Ausführungsform einer erfindungsgemäßen Kunststofftasche,
- Figur 5: eine schematische Draufsicht auf die Ausführungsform der erfindungsgemäßen Kunststofftasche gemäß Figur 4,
- Figur 6: eine schematische Draufsicht einer alternativen Ausführungsform der erfindungsgemäßen Kunststofftasche,
- Figur 7: eine schematische perspektivische Ansicht einer weiteren Ausführungsform einer erfindungsgemäßen Kunststofftasche und
- Figur 8: eine schematische Draufsicht auf die Ausführungsform der erfindungsgemäßen Kunststofftasche gemäß Figur 7.

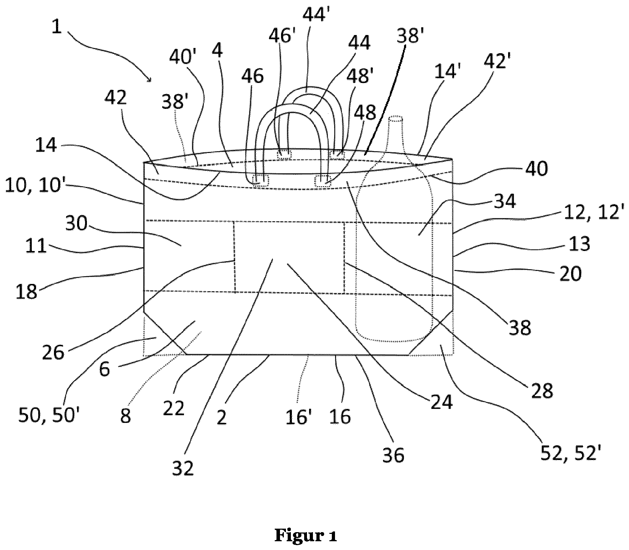

Figur 1 zeigt eine schematische Ansicht einer erfindungsgemäßen Kunststofftasche 1. Diese umfasst einen Taschenboden 2 mit einer Taschenbodenfalte 36 und eine gegenüberliegenden Taschenöffnung 4 sowie eine Vorderwand 6 und eine Rückwand 8, jeweils mit einem ersten Seitenrand 10, 10' und einem gegenüberliegenden zweiten Seitenrand 12, 12' sowie einem Öffnungsrand 14, 14' und einem Bodenrand 16, 16'. In der gezeigten Ausführungsform sind die Vorderwand 6 und die Rückwand 8 im Bereich ihrer ersten 10, 10' und zweiten Seitenränder 12, 12' und ihrer Bodenränder 16, 16' mittels Verschweißen unter Ausbildung von einem ersten Taschenrand 18 und einem zweiten Taschenrand 20 sowie einem Taschenbodenrand 22 miteinander verbunden. In der gezeigten Ausführungsform weist die Vorderwand 6 innenseitig eine Kunststofffolienlage 24 auf, die sich vom ersten Seitenrand 10 in Richtung des zweiten Seitenrands 12 erstreckt und beabstandet vom Bodenrand 16 in Richtung des Öffnungsrands 14 erstreckt, wobei die Kunststofffolienlage 24 über zwei Schweiß- oder Klebeareale 26, 28 verfügt, die abschnittsweise mit der Innenseite von Vorderwand 6 verbunden sind und die Tascheninneneinschübe 30, 32 und 34 ausbilden, die zum Taschenboden 2 hin offen sind. Exemplarisch ist im Tascheninneneinschub 34 die Aufnahme einer Getränkeflasche gezeigt. Ferner ist In der gezeigten Ausführungsform in entsprechender Weise die Rückwand 8 innenseitig ebenfalls mit einer Kunststofffolienlage ausgestattet (nicht abgebildet). Die hier gezeigte Ausführungsform der erfindungsgemäßen Kunststofftasche 1 umfasst weiterhin an der Innenseite der Vorder- 6 als auch der Rückwand 8 einen Saum 38, 38', der durch Umschlagen von Fortsetzungsabschnitten 42, 42' jeweils an der Vorder- 6 als auch der Rückwand 8 entsteht. Die Säume 38, 38' sind innenseitig mit der Vorderwand 6 bzw. der Rückwand 8 über kontinuierliche Längsschweißungen 40, 40' verbunden. Ferner weist die hier gezeigte Ausführungsform der erfindungsgemäßen Kunststofftasche 1 an der Vorder- 6 und Rückwand 8 Halteschlaufen 44, 44' auf, welche innenseitig am verstärktem Saum 38, 38' über einen ersten Anbindungsbereich 46, 46' und einen zweiten Anbindungsbereich 48, 48' angebracht sind. Ferner weist die gezeigte Kunststofftasche 1 hier dreiecksförmige Aussparungen 50, 50', 52, 52' am Taschenboden 2 auf.

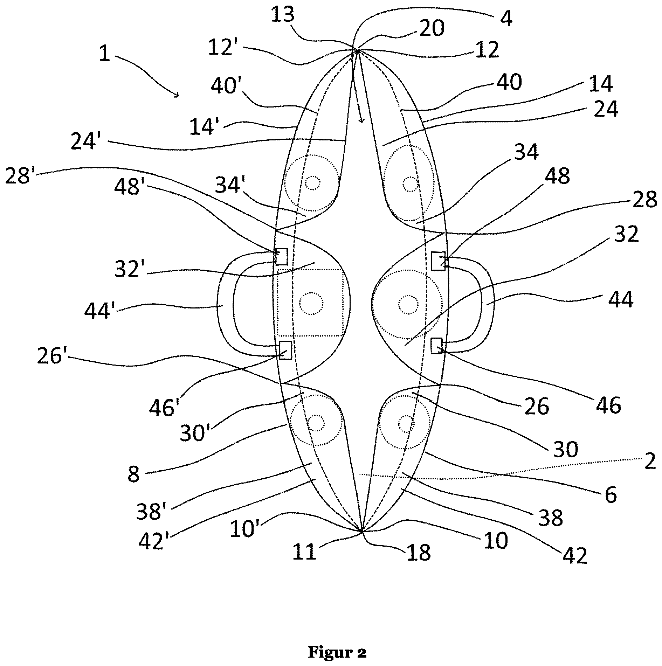

Figur 2 zeigt eine schematische Draufsicht auf die Ausführungsform der erfindungsgemä-βen Kunststofftasche 1 gemäß Figur 1. Die Kunststofffolienlagen 24, 24' sind innenseitig mit der Vorderwand 6 bzw. der Rückwand 8 durch Schweiß- oder Klebeareale 26, 26', 28, 28' verbunden, sodass insgesamt sechs Tascheninneneinschübe 30, 30', 32, 32', 34 und 34' zur Aufnahme von sechs Getränkeflaschen ausgebildet werden. Liegen in den Tascheninneneinschüben 30, 30', 32, 32', 34 keine Flaschen vor, so liegen die Kunststofffolienlagen 24, 24' an den Innenseiten von Vorderwand 6 bzw. der Rückwand 8 an und stören den herkömmlichen Befüllvorgang einer Kunststofftasche 1 nicht.

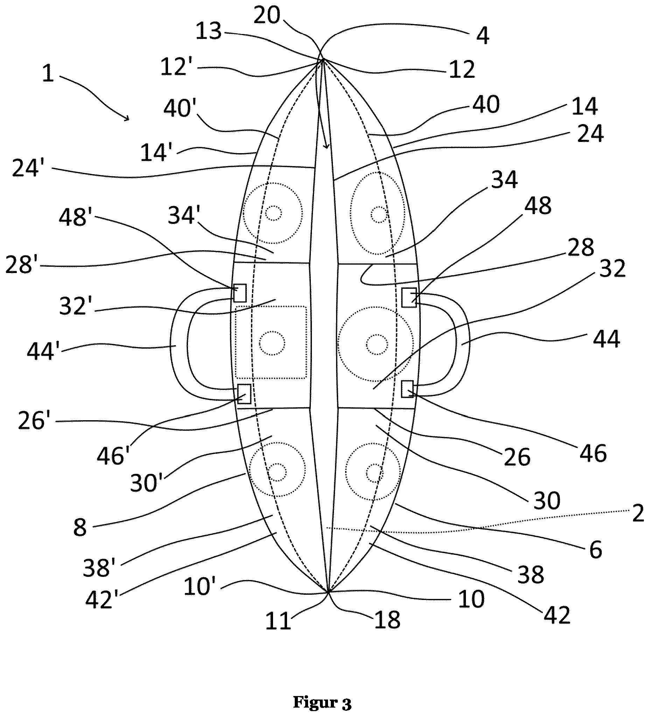

Figur 3 zeigt eine schematische Draufsicht auf eine weitere Ausführungsform einer erfindungsgemäßen Kunststofftasche 1. Diese unterscheidet sich von der Ausführungsform gemäß Figur 2 dadurch, dass die Schweiß- oder Klebeareale 26, 26', 28 und 28' nicht als punktuelle bzw. durchgehende Verschweißungen oder Verklebungen mit der Vorder- 6 bzw. Rückwand 8 ausgebildet sind, sondern als separate Folientrennwände, was die Aufnahme größerer Getränkeflaschen bzw. von Getränkeflaschen mit einem größeren Fassungsvermögen ermöglicht.

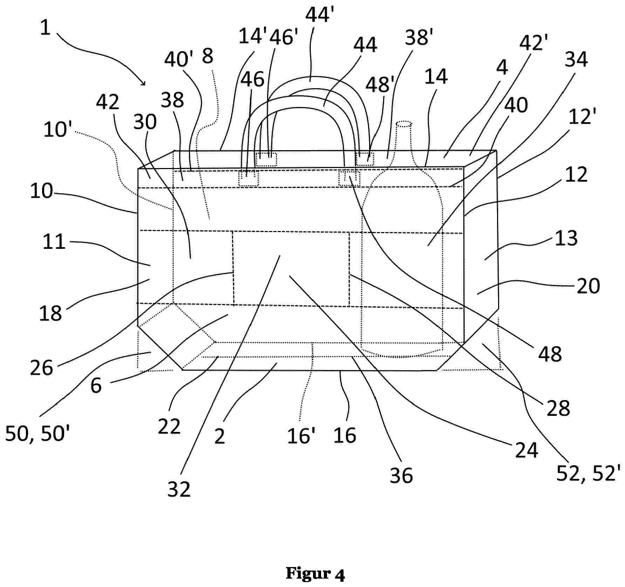

Figur 4 zeigt eine schematische Ansicht einer alternativen Ausführungsform einer erfindungsgemäßen Kunststofftasche 1. Diese unterscheidet sich von der Ausführungsform gemäß Figur 1) dadurch, dass die ersten 10, 10' und zweiten Seitenränder 12, 12' der Vorderwand 6 und der Rückwand 8 über eine erste Seitenwand 11 und eine zweite Seitenwand 13 miteinander verbunden, insbesondere miteinander verschweißt, sind. Der erste Taschenrand 18 und der zweite Taschenrand 20 werden demnach über die mittlere Linie der ersten 11 und zweiten Seitenwand 13 gebildet, die vom Taschenboden 2 bis zur Taschenöffnung 4 verläuft.

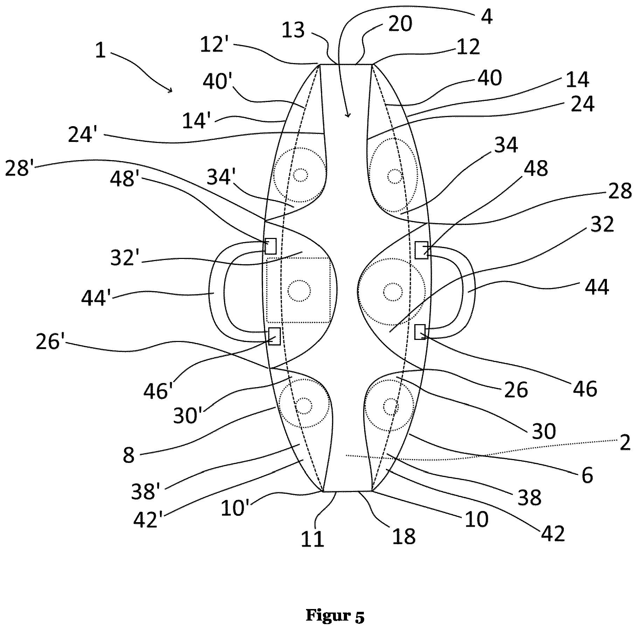

Figur 5 zeigt eine schematische Draufsicht auf die Ausführungsform der erfindungsgemäßen Kunststofftasche 1 gemäß Figur 4. Die Kunststofffolienlagen 24, 24' sind innenseitig mit der Vorderwand 6 bzw. der Rückwand 8 durch Schweiß- oder Klebeareale 26, 26', 28, 28' verbunden, sodass insgesamt sechs Tascheninneneinschübe 30, 30', 32, 32', 34 und 34' zur Aufnahme von sechs Getränkeflaschen ausgebildet werden.

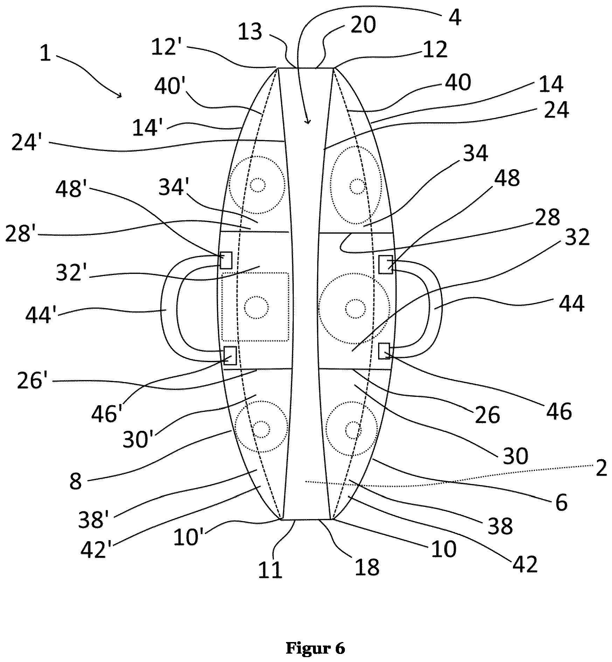

Figur 6 zeigt eine schematische Draufsicht auf eine weitere Ausführungsform einer erfindungsgemäßen Kunststofftasche 1. Diese unterscheidet sich von der Ausführungsform gemäß Figur 5 dadurch, dass die Schweiß- oder Klebeareale 26, 26', 28 und 28' nicht als punktuelle bzw. durchgehende Verschweißungen oder Verklebungen mit der Vorder- 6 bzw. Rückwand 8 ausgebildet sind, sondern als separate Folientrennwände, was die Aufnahme größerer Getränkeflaschen bzw. von Getränkeflaschen mit einem größeren Fassungsvermögen ermöglicht.

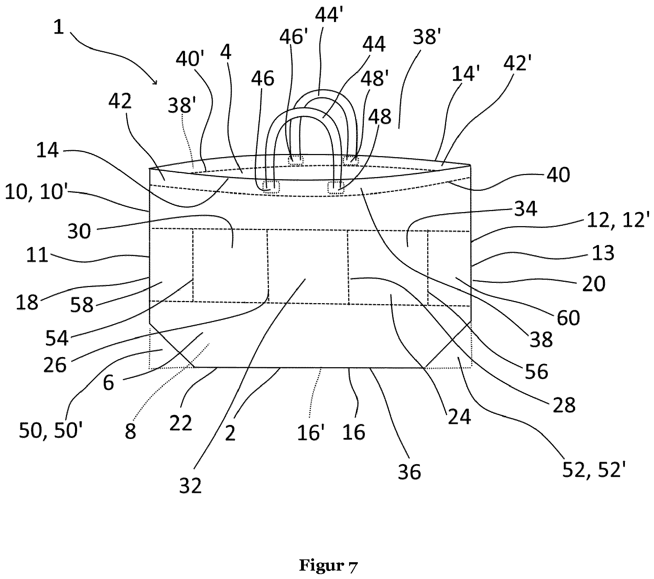

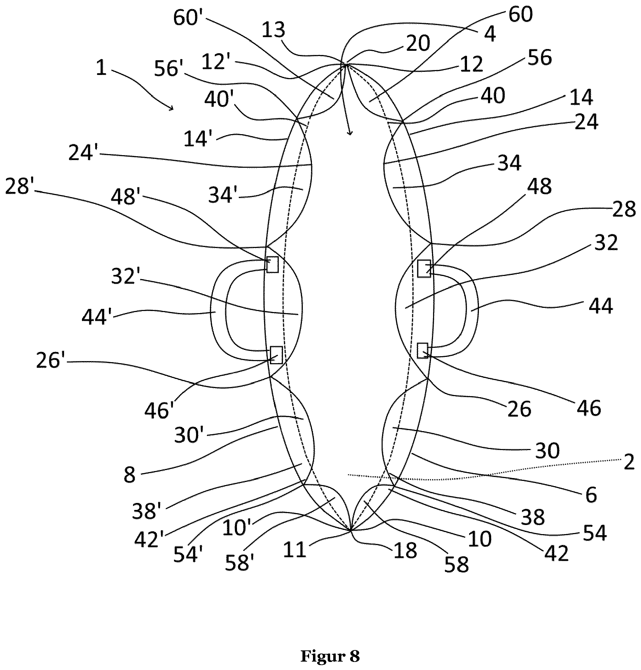

Figur 7 zeigt eine schematische Ansicht einer besonders bevorzugten, alternativen Ausführungsform einer erfindungsgemäßen Kunststofftasche 1. Diese unterscheidet sich von der Ausführungsform gemäß Figur 1 dadurch, dass ein Schweiß- oder Klebeareal 54 in Form einer Schweißnaht zur Befestigung der Kunststofffolienlage 24 benachbart zum erstem Seitenrand 10 vorliegt, die einen Abstand zu diesem ersten Seitenrand 10 hat, der kleiner ist, vorzugsweise etwa um die Hälfte kleiner, als der Abstand zwischen dem Schweiß- oder Klebeareal 26 und dem Schweiß- oder Klebeareal 54 wie auch zwischen dem Schweiß- oder Klebeareal 26 und dem Schweiß- oder Klebeareal 28 und überdies wie auch zwischen dem Schweiß- oder Klebeareal 28 und dem Schweiß- oder Klebeareal 56, jeweils in Form einer Schweißnaht vorliegend. Darüber hinaus weist das Schweiß- oder Klebeareal 56 in Form einer Schweißnaht zur Befestigung der Kunststofffolienlage 24, das benachbart zum zweiten Seitenrand 12 vorliegt, einen Abstand zu diesem zweiten Seitenrand 12 auf, der kleiner ist, vorzugsweise etwa um die Hälfte kleiner, als der Abstand zwischen dem Schweiß- oder Klebeareal 26 und dem Schweiß- oder Klebeareal 54 wie auch zwischen dem Schweiß- oder Klebeareal 26 und dem Schweiß- oder Klebeareal 28 und überdies wie auch zwischen dem Schweiß- oder Klebeareal 28 und dem Schweiß- oder Klebeareal 56, jeweils in Form einer Schweißnaht vorliegend. Die Kunststofffolienlage 24' der Rückwand 8 kann innenseitig mit derselben in gleicher Weise verbunden sein, wie vorangehend für die Vorderwand erläutert. Dies ist aus Gründen der besseren Übersichtlichkeit in Figur 7 nicht gezeigt, wohl aber in Figur 8.

Figur 8 zeigt eine schematische Draufsicht auf die Ausführungsform der erfindungsgemä-βen Kunststofftasche 1 gemäß Figur 7. Die Kunststofffolienlagen 24, 24' sind innenseitig mit der Vorderwand 6 bzw. der Rückwand 8 durch Schweiß- oder Klebeareale 26, 26', 28, 28' bzw. 54, 54', 56, 56', jeweils insbesondere in Form von Schweißnähten, verbunden, sodass insgesamt sechs größere Tascheninneneinschübe 30, 30', 32, 32', 34 und 34' und vier kleinere Tascheninneneinschübe 58, 58', 60, 60' ausgebildet werden. Indem die vier kleineren Tascheninneneinschübe ungenutzt bleiben, verbleibt regelmäßig selbst bei Aufnahme von Flaschen in den größeren Tascheninneneinschüben noch genügend Stauraum für die Aufnahme weiterer Produkte zwischen den Kunststofffolienlagen 24, 24'.

## Patentansprüche

1. Kunststofftasche (1) mit einem Taschenboden (2) und einer gegenüberliegenden Taschenöffnung (4), umfassend
eine Vorderwand (6) und eine Rückwand (8), jeweils mit einem ersten Seitenrand (10, 10') und einem gegenüberliegenden zweiten Seitenrand (12, 12') sowie einem Öffnungsrand (14, 14') und einem Bodenrand (16, 16'),
wobei die Vorderwand (6) und die Rückwand (8) im Bereich ihrer ersten (10, 10') und zweiten (12, 12') Seitenränder und ihrer Bodenränder (16, 16') mindestens abschnittsweise, insbesondere mittels Verschweißen, unter Ausbildung von gegenüberliegenden ersten (18) und zweiten Taschenrändern (20) sowie einem Taschenbodenrand (22) miteinander verbunden sind, wobei die Vorderwand (6) und/oder die Rückwand (8) innenseitig mindestens eine Kunststofffolienlage (24, 24') aufweist, die sich vom oder beabstandet vom ersten Seitenrand (10, 10') in Richtung des oder bis zum gegenüberliegenden zweiten Seitenrand (12, 12') sowie vom Bodenrand (16, 16) oder beabstandet vom Bodenrand (16, 16') in Richtung des oder bis zum Öffnungsrand (14, 14') erstreckt,
wobei die Kunststofffolienlage (24, 24`) der Vorderwand (6) und/oder der Rückwand (8) über mindestens zwei, insbesondere drei oder vier, jeweils voneinander beabstandete, insbesondere im Wesentlichen parallel verlaufende, sich beabstandet vom Bodenrand (16, 16') in Richtung des oder bis zum Öffnungsrand (14, 14') erstreckende Schweiß- oder Klebeareale (26, 26', 28, 28 '), insbesondere Schweißnähte, mindestens abschnittsweise mit der Innenseite von Vorderwand (6) bzw. Rückwand (8) verbunden ist unter Ausbildung von zur Taschenöffnung (4) hin offenen Tascheninneneinschüben (30, 32, 34), jeweils eingerichtet und ausgelegt zur Aufnahme einer oder mehrerer Getränkeflaschen,
**dadurch gekennzeichnet, dass**
die Vorderwand (6) mehrlagig ausgestaltet ist und dass die Kunststofffolienlage (24) über die Schweiß- oder Klebeareale (54, 26; 26, 28; 28, 56) ausschließlich mit der innenliegenden Lage der mehrlagigen Vorderwand (6) verbunden ist und/oder dass die Rückwand (8) mehrlagig ausgestaltet ist und dass die Kunststofffolienlage (24') über die Schweiß- oder Klebeareale (54', 26'; 26', 28'; 28', 56`) ausschließlich mit der innenliegenden Lage der mehrlagigen Rückwand (8) verbunden ist.

2. Kunststofftasche (1) nach Anspruch 1, **dadurch gekennzeichnet, dass** die Tascheninneneinschübe (30, 32, 34) zum Taschenboden (2) hin offen sind.

3. Kunststofftasche (1) nach Anspruch 1 oder 2, **dadurch gekennzeichnet, dass**
die Vorderwand (6) und die Rückwand (8) entlang ihrer ersten Seitenränder (10, 10') über eine erste Seitenwand (11) verbunden sind und/oder dass die Vorderwand (6) und die Rückwand (8) entlang ihrer zweiten Seitenränder (12, 12`) über eine zweite Seitenwand (13) miteinander verbunden sind.

4. Kunststofftasche (1) nach einem der vorangehenden Ansprüche, **dadurch gekennzeichnet, dass**
der Taschenboden (2) eine Bodenfalte (36) aufweist, wobei sich von der Bodenfalte (36) bis zur Vorderwand (6) ein erster Bodenfaltenabschnitt erstreckt und wobei sich von der Bodenfalte (36) bis zur Rückwand (8) ein zweiter Bodenfaltenabschnitt erstreckt.

5. Kunststofftasche (1) nach einem der vorangehenden Ansprüche, **dadurch gekennzeichnet, dass**
die Vorderwand (6) und/oder die Rückwand (8), insbesondere die Vorder- (6) und die Rückwand (8), im Bereich der Öffnungsränder (14, 14') innen- und/oder außenseitig, insbesondere innenseitig, zumindest abschnittsweise einen Saum (38, 38') aufweisen.

6. Kunststofftasche (1) nach Anspruch 5, **dadurch gekennzeichnet, dass**
sich der Saum (38) der Vorderwand (6) und/oder der Saum (38') der Rückwand (8) vom ersten Seitenrand (10, 10') der Vorderwand (6) bzw. der Rückwand (8) bis zum gegenüberliegenden zweiten Seitenrand (12, 12') der Vorderwand (6) bzw. der Rückwand (8) erstreckt.

7. Kunststofftasche (1) nach Anspruch 5 oder 6, **dadurch gekennzeichnet, dass**
der Saum (38) der Vorderwand (6) beabstandet von deren Öffnungsrand (14) entlang einer Erstreckung von oder beabstandet von dem ersten Seitenrand (10) in Richtung des oder bis zum zweiten Seitenrand (12) mit der Vorderwand (6) verbunden, insbesondere verschweißt und/oder verklebt, ist, insbesondere mit einer kontinuierlichen Längsschweißung (40), und/oder dass der Saum (38 `) der Rückwand (8) beabstandet von deren Öffnungsrand (14') entlang einer Erstreckung von oder beabstandet von dem ersten Seitenrand (10') in Richtung des oder bis zum zweiten Seitenrand (12') mit der Rückwand (8) verbunden, insbesondere verschweißt und/oder verklebt, ist, insbesondere mit einer kontinuierlichen Längsschweißung (40').

8. Kunststofftasche (1) nach einem der Ansprüche 5 bis 7, **dadurch gekennzeichnet, dass**
der Saum (38) der Vorderwand (6) als Fortsetzungsabschnitt (42) der Vorderwand (6) mittels ein- oder mehrmaligen Umschlagens doppel- bzw. mehrlagig ausgestaltet ist und/oder dass der Saum (38') der Rückwand (8) als Fortsetzungsabschnitt (42') der Rückwand (8) mittels ein- oder mehrmaligen Umschlagens doppel- bzw. mehrlagig ausgestaltet ist.

9. Kunststofftasche (1) nach einem der vorangehenden Ansprüche, ferner umfassend mindestens eine mit der Vorderwand (6) und/oder mindestens eine mit der Rückwand (8) verbundene Halteschlaufe (44, 44') mit jeweils einem ersten (46, 46') und einem zweiten Anbindungsbereich (48, 48 `), insbesondere wobei die mit der Vorderwand (6) und die mit der Rückwand (8) verbundene Halteschlaufe (44, 44') jeweils in ihren ersten (46, 46) und zweiten Anbindungsbereichen (48, 48') im Bereich des Saums (38, 38') der Vorder- (6) und/oder Rückwand (8) verschweißt und/ oder verklebt sind.

10. Kunststofftasche (1) nach Anspruch 9, **dadurch gekennzeichnet, dass**
die mit der Vorderwand (6) über ihre ersten (46) und zweiten Anbindungsbereiche (48) verbundene Halteschlaufe (44) und/oder die mit der Rückwand (8) über ihre ersten (46') und zweiten Anbindungsbereich (48') verbundene Halteschlaufe (44') im Bereich vom jeweiligen ersten (46, 46') bis zum zweiten Anbindungsbereich (48, 48 ') zumindest abschnittsweise einen ersten flexiblen schlauchförmigen Hohlkörper oder einen ein- oder mehrlagigen, keinen Hohlkörper bildenden Materialstreifen, insbesondere Kunststoffmaterialstreifen, aufweist, der abschnittsweise oder im Wesentlichen vollständig von einem zweiten flexiblen schlauchförmigem Hohlkörper umhüllt ist.

11. Kunststofftasche (1) nach einem der vorangehenden Ansprüche, **dadurch gekennzeichnet, dass**
die mindestens eine Kunststofffolienlage (24, 24') mindestens abschnittsweise mit dem ersten Seitenrand (10, 10') und/oder dem zweiten Seitenrand (12, 12'), insbesondere mittels Verschweißen, verbunden ist.

12. Kunststofftasche (1) nach einem der vorangehenden Ansprüche, **dadurch gekennzeichnet, dass**
die Vorderwand (6) und die Rückwand (8) am Übergang ihrer Bodenränder (16, 16') zu den Taschenrändern (18, 20), insbesondere dreiecksförmige, Aussparungen (50, 50', 52, 52') aufweisen.

13. Kunststofftasche (1) nach einem der vorangehenden Ansprüche, **dadurch gekennzeichnet, dass**
die mindestens eine Kunststofffolienlage (24) in Richtung von dem Bodenrand (16) zum Öffnungsrand (14) der Vorderwand (6) eine Erstreckung aufweist, die 30 bis 80%, insbesondere 40 bis 60%, der Erstreckung der Vorderwand (6) von dem Bodenrand (16) zum Öffnungsrand (14) entspricht, und/oder dass die mindestens eine Kunststofffolienlage ( 24') in Richtung von dem Bodenrand (16') zum Öffnungsrand (14') der Rückwand (8) eine Erstreckung aufweist, die 30 bis 80%, insbesondere 40 bis 60%, der Erstreckung der Rückwand (8) von dem Bodenrand (16') zum Öffnungsrand (14') entspricht.

14. Kunststofftasche (1) nach einem der Ansprüche 2 bis 13, **dadurch gekennzeichnet, dass**
die bodenseitige Öffnung der Tascheninneneinschübe (30, 32, 34) einen Abstand bis zum Taschenboden (2) aufweist, der 5 bis 30%, insbesondere 10 bis 20%, der Erstreckung der Vorderwand (6) und/oder Rückwand (8) von dem Bodenrand (16, 16') zum Öffnungsrand (14, 14') entspricht.

15. Kunststofftasche (1) nach einem der vorangehenden Ansprüche, **dadurch gekennzeichnet, dass**
die mindestens eine Kunststofffolienlage (24) in Richtung vom ersten (10) bis zum zweiten Seitenrand (12) der Vorderwand (6) eine Erstreckung aufweist, die der Erstreckung der Vorderwand (6) vom ersten (10) bis zum zweiten Seitenrand (12) entspricht, und/oder dass die mindestens eine Kunststofffolienlage (24') in Richtung vom ersten (10') bis zum zweiten Seitenrand (12') der Rückwand (8) eine Erstreckung aufweist, die der Erstreckung der Rückwand (8) vom ersten (10') bis zum zweiten Seitenrand (12') entspricht.

16. Kunststofftasche (1) nach einem der vorangehenden Ansprüche, **dadurch gekennzeichnet, dass**
die Vorderwand (6) und/oder die Rückwand (8) und/oder die mindestens eine Kunststofffolienlage (24, 24') und/oder gegebenenfalls die Seitenwände (11, 13) der Kunststofftasche (1) und/oder der Taschenboden (2) und/oder der Saum (38, 38 ') von Vorder- (6) und/oder Rückwand (8) und/oder die Halteschlaufen (44, 44'), im Wesentlichen auf thermoplastischen Kunststoffen, bevorzugt Polyolefinen, besonders bevorzugt Polyethylen, insbesondere LD-Polyethylen, und/oder Polyester basieren oder hieraus gefertigt sind.

17. Kunststofftasche (1) nach einem der vorangehenden Ansprüche, **dadurch gekennzeichnet, dass**
diese im Wesentlichen aus recyclefähigem Material besteht oder dieses umfasst.

18. Kunststofftasche (1) nach einem der Ansprüche 1 bis 8, **dadurch gekennzeichnet, dass**
diese im Wesentlichen einstückig ausgebildet ist.

19. Kunststofftasche (1) nach einem der vorangehenden Ansprüche, **dadurch gekennzeichnet, dass**
die Kunststofffolienlage (24) der Vorderwand (6) sich vom ersten Seitenrand (10) bis zum gegenüberliegenden zweiten Seitenrand (12) erstreckt,
wobei der Abstand des Schweiß- oder Klebeareals (54), insbesondere in Form einer Schweißnaht, das bzw. die benachbart zum ersten Seitenrand (10) angeordnet ist, zu diesem ersten Seitenrand (10) kleiner ist als der Abstand mindestens eines Paares, insbesondere sämtlicher Paare, an einander benachbarten Schweiß- oder Klebearealen (54, 26; 26, 28; 28, 56) und/oder, insbesondere und,
wobei der Abstand des Schweiß- oder Klebeareals (56),insbesondere in Form einer Schweißnaht, das bzw. die benachbart zum zweiten Seitenrand (12) angeordnet ist, zu diesem zweiten Seitenrand (12) kleiner ist als der Abstand mindestens eines Paares, insbesondere sämtlicher Paare, an einander benachbarten Schweiß- oder Klebearealen (54, 26; 26, 28; 28, 56) und/oder, insbesondere und, dass die Kunststofffolienlage (24') der Rückwand (8) sich vom ersten Seitenrand (10 ') bis zum gegenüberliegenden zweiten Seitenrand (12') erstreckt,
wobei der Abstand des Schweiß- oder Klebeareals (54'), insbesondere in Form einer Schweißnaht, das bzw. die benachbart zum ersten Seitenrand (10') angeordnet ist, zu diesem ersten Seitenrand (10 ') kleiner ist als der Abstand mindestens eines Paares, insbesondere sämtlicher Paare, an einander benachbarten Schweiß- oder Klebearealen (54', 26'; 26', 28 ; 28', 56') und/oder, insbesondere und,
wobei der Abstand des Schweiß- oder Klebeareals (56"),insbesondere in Form einer Schweißnaht, das bzw. die benachbart zum zweiten Seitenrand (12') angeordnet ist, zu diesem zweiten Seitenrand (12') kleiner ist als der Abstand mindestens eines Paares, insbesondere sämtlicher Paare, an einander benachbarten Schweiß- oder Klebearealen (54', 26'; 26', 28 ; 28', 56').

20. Kunststofftasche (1) nach einem der Ansprüche 1 bis 18, **dadurch gekennzeichnet, dass**
die Kunststofffolienlage (24) der Vorderwand (6) sich vom oder beabstandet vom, insbesondere beabstandet vom, ersten Seitenrand (10) in Richtung des, jedoch nicht bis zum gegenüberliegenden zweiten Seitenrand (12) erstreckt,
wobei der Abstand des Schweiß- oder Klebeareals (54), insbesondere in Form einer Schweißnaht, das bzw. die benachbart zum ersten Seitenrand (10) angeordnet ist, zu diesem ersten Seitenrand (10) kleiner ist als der Abstand mindestens eines Paares, insbesondere sämtlicher Paare, an einander benachbarten Schweiß- oder Klebearealen (54, 26; 26, 28; 28, 56) und/oder, insbesondere und,
wobei der Abstand des Schweiß- oder Klebeareals (56),insbesondere in Form einer Schweißnaht, das bzw. die benachbart zum zweiten Seitenrand (12) angeordnet ist, zu diesem zweiten Seitenrand (12) kleiner ist als der Abstand mindestens eines Paares, insbesondere sämtlicher Paare, an einander benachbarten Schweiß- oder Klebearealen (54, 26; 26, 28; 28, 56)
und/oder, insbesondere und, dass
die Kunststofffolienlage (24') der Rückwand (8) sich beabstandet vom ersten Seitenrand (10') in Richtung des, jedoch nicht bis zum gegenüberliegenden zweiten Seitenrand (12') erstreckt,
wobei der Abstand des Schweiß- oder Klebeareals (54'), insbesondere in Form einer Schweißnaht, das bzw. die benachbart zum ersten Seitenrand (10') angeordnet ist, zu diesem ersten Seitenrand (10 ') kleiner ist als der Abstand mindestens eines Paares, insbesondere sämtlicher Paare, an einander benachbarten Schweiß- oder Klebearealen (54', 26'; 26', 28'; 28', 56`) und/oder, insbesondere und,
wobei der Abstand des Schweiß- oder Klebeareals (56'),insbesondere in Form einer Schweißnaht, das bzw. die benachbart zum zweiten Seitenrand (12') angeordnet ist, zu diesem zweiten Seitenrand (12') kleiner ist als der Abstand mindestens eines Paares, insbesondere sämtlicher Paare, an einander benachbarten Schweiß- oder Klebearealen (54', 26'; 26', 28'; 28', 56').

21. Kunststofftasche (1) nach Anspruch 19 oder 20, **dadurch gekennzeichnet, dass** in Bezug auf die Vorderwand (6) der Abstand des Schweiß- oder Klebeareals (54), insbesondere in Form einer Schweißnaht, das bzw. die benachbart zum ersten Seitenrand (10) angeordnet ist, bis zu diesem ersten Seitenrand (10) maximal 75 %, insbesondere maximal 50 %, des Abstands mindestens eines Paares an einander benachbarten Schweiß- oder Klebearealen (54, 26; 26, 28; 28, 56), insbesondere des Abstands desjenigen Paares an einander benachbarten Schweiß- oder Klebearealen (54, 26; 26, 28; 28, 56), das den kleinsten Abstand zueinander unter den Paaren an einander benachbarten Schweiß- oder Klebearealen (54, 26; 26, 28; 28, 56) aufweist, beträgt
und/oder, insbesondere und, dass
in Bezug auf die Vorderwand (6) der Abstand des Schweiß- oder Klebeareals (56), insbesondere in Form einer Schweißnaht, das bzw. die benachbart zum zweiten Seitenrand (12) angeordnet ist, bis zu diesem zweiten Seitenrand (12) maximal 75 %, insbesondere maximal 50 %, des Abstands mindestens eines Paares an einander benachbarten Schweiß- oder Klebearealen (54, 26; 26, 28; 28, 56), insbesondere des Abstands desjenigen Paares an einander benachbarten Schweiß- oder Klebearealen (54, 26; 26, 28; 28, 56), das den kleinsten Abstand zueinander unter den Paaren an einander benachbarten Schweiß- oder Klebearealen (54, 26; 26, 28; 28, 56) aufweist, beträgt.

22. Kunststofftasche (1) nach einem der Ansprüche 19 bis 21, **dadurch gekennzeichnet, dass**
in Bezug auf die Rückwand (8) der Abstand des Schweiß- oder Klebeareals (54'), insbesondere in Form einer Schweißnaht, das bzw. die benachbart zum ersten Seitenrand (10') angeordnet ist, bis zu diesem ersten Seitenrand (10') maximal 75 %, insbesondere maximal 50 %, des Abstands mindestens eines Paares an einander benachbarten Schweiß- oder Klebearealen (54', 26'; 26', 28'; 28', 56'), insbesondere des Abstands desjenigen Paares an einander benachbarten Schweiß- oder Klebearealen (54', 26'; 26', 28'; 28', 56'), das den kleinsten Abstand zueinander unter den Paaren an einander benachbarten Schweiß- oder Klebearealen (54', 26'; 26', 28'; 28', 56') aufweist, beträgt
und/oder, insbesondere und, dass
in Bezug auf die Rückwand (8) der Abstand des Schweiß- oder Klebeareals (56'), insbesondere in Form einer Schweißnaht, das bzw. die benachbart zum zweiten Seitenrand (12') angeordnet ist, bis zu diesem zweiten Seitenrand (12') maximal 75 %, insbesondere maximal 50 %, des Abstands mindestens eines Paares an einander benachbarten Schweiß- oder Klebearealen (54', 26'; 26', 28'; 28', 56'), insbesondere des Abstands desjenigen Paares an einander benachbarten Schweiß- oder Klebearealen (54', 26'; 26', 28'; 28', 56'), das den kleinsten Abstand zueinander unter den Paaren an einander benachbarten Schweiß- oder Klebearealen (54', 26'; 26', 28'; 28', 56`) aufweist, beträgt.

23. Kunststofftasche (1) nach einem der vorangehenden Ansprüche, **dadurch gekennzeichnet, dass**
in Bezug auf die Vorderwand (6) der Abstand von mindestens zwei Paaren, insbesondere von sämtlichen Paaren, an einander benachbarten Schweiß- oder Klebearealen (54, 26; 26, 28; 28, 56), insbesondere in Form von Schweißnähten, im Wesentlichen übereinstimmt und/oder dass
in Bezug auf die Rückwand (8) der Abstand von mindestens zwei Paaren, insbesondere von sämtlichen Paaren, an einander benachbarten Schweiß- oder Klebearealen (54', 26'; 26', 28 '; 28', 56), insbesondere in Form von Schweißnähten, im Wesentlichen übereinstimmt.

24. Kunststofftasche (1) nach einem der vorangehenden Ansprüche, **dadurch gekennzeichnet, dass**
die Vorderwand (6) doppellagig ausgestaltet ist und/oder, insbesondere und, dass die Rückwand (8) doppellagig ausgestaltet ist.

25. Kunststofftasche (1) nach Anspruch 24, **dadurch gekennzeichnet, dass**
die Kunststofffolienlage (24) über die Schweißareale (54, 26; 26, 28; 28, 56) in Form von Schweißnähten ausschließlich mit der innenliegenden Lage der mehrlagigen Vorderwand (6) verbunden ist und/oder, insbesondere und, dass
die Kunststofffolienlage (24') über die Schweißareale (54', 26'; 26', 28'; 28', 56`) in Form von Schweißnähten ausschließlich mit der innenliegenden Lage der mehrlagigen Rückwand (8) verbunden ist.

26. Kunststofftasche (1) nach einem der vorangehenden Ansprüche, **dadurch gekennzeichnet, dass**
die Kunststofffolienlage (24, 24') der Vorderwand (6) und/oder, insbesondere und, der Rückwand (8) LD-Polyethylen umfasst oder hieraus gebildet ist und/oder, insbesondere und, dass
die Kunststofffolienlage (24, 24') der Vorderwand (6) und/oder, insbesondere und, der Rückwand (8) ein durchschnittliche, insbesondere absolute, Dicke im Bereich von 30 bis 80 µm, insbesondere im Bereich von 35 bis 60 µm, aufweisen.

27. Verwendung der Kunststofftasche (1) nach einem der vorangehenden Ansprüche zum Transport von Getränkeflaschen, insbesondere von Getränkeflaschen mit einem Fassungsvermögen von bis zu 2 Litern.

## Claims

1. A plastic bag (1) having a bag base (2) and an opposite bag opening (4), comprising
a front wall (6) and a rear wall (8), each having a first side edge (10, 10'), an opposite second side edge (12, 12'), an opening edge (14, 14') and a bottom edge (16, 16'),
wherein the front wall (6) and the rear wall (8) are, in the region of the first (10, 10') and second (12, 12') side edges and the bottom edges (16, 16') thereof, interconnected at least in portions, in particular by means of welding, so as to form opposite first (18) and second (20) bag edges and a bag bottom edge (22), wherein the front wall (6) and/or the rear wall (8) has/have, on the inside, at least one plastic film layer (24, 24'), which extends from or from a point spaced apart from the first side edge (10, 10') towards or as far as the opposite second side edge (12, 12') and from the bottom edge (16, 16') or from a point spaced apart from the bottom edge (16, 16') towards or as far as the opening edge (14, 14'),
wherein the plastic film layer (24, 24') of the front wall (6) and/or the rear wall (8) is connected to the inside of the front wall (6) or rear wall (8) at least in portions by means of at least two, in particular three or four, weld or adhesive areas (26, 26', 28, 28'), in particular weld seams, which are spaced apart from one another, in particular extend substantially in parallel and extend from a point spaced apart from the bottom edge (16, 16') towards or as far as the opening edge (14, 14'), so as to form internal bag inserts (30, 32, 34), which are open towards the bag opening (4) and are each configured and adapted to receive one or more beverage bottles, **characterized in that**
the front wall (6) is multi-layered and that the plastic film layer (24) is connected only to the inside layer of the multi-layered front wall (6) by the weld or adhesive areas (54, 26; 26, 28; 28, 56) and/or **in that**
the rear wall (8) is multi-layered and that the plastic film layer (24') is connected only to the inside layer of the multi-layered rear wall (8) by the weld or adhesive areas (54', 26'; 26', 28'; 28', 56').

2. The plastic bag (1) according to Claim 1, **characterized in that**
the internal bag inserts (30, 32, 34) are open towards the bag base (2).

3. The plastic bag (1) according to Claim 1 or 2, **characterized in that**
the front wall (6) and the rear wall (8) are interconnected by a first side wall (11) along the first side edges (10, 10') thereof, and/or the front wall (6) and the rear wall (8) are interconnected by a second side wall (13) along the second side edges (12, 12') thereof.

4. The plastic bag (1) according to any one of the preceding claims, **characterized in that**
the bag base (2) has a base fold (36), wherein a first base fold portion extends from the base fold (36) as far as the front wall (6), and a second base fold portion extends from the base fold (36) as far as the rear wall (8).

5. The plastic bag (1) according to any one of the preceding claims, **characterized in that**
the front wall (6) and/or the rear wall (8), in particular the front wall (6) and the rear wall (8), has/have a seam (38, 38') at least in portions on the inside and/or outside, in particular on the inside, in the region of the opening edges (14, 14').

6. The plastic bag (1) according to Claim 5, **characterized in that**
the seam (38) of the front wall (6) and/or the seam (38') of the rear wall (8) extends from the first side edge (10, 10') of the front wall (6) or of the rear wall (8) as far as the opposite second side edge (12, 12') of the front wall (6) or of the rear wall (8).

7. The plastic bag (1) according to Claim 5 or 6, **characterized in that**
the seam (38) of the front wall (6) is connected, in particular welded and/or adhesively bonded, to the front wall (6) at a point spaced apart from the opening edge (14) of said front wall in an extension leading from or from a point spaced apart from the first side edge (10) towards or as far as the second side edge (12), in particular by means of a continuous longitudinal weld (40), and/or the seam (38') of the rear wall (8) is connected, in particular welded and/or adhesively bonded, to the rear wall (8) at a point spaced apart from the opening edge (14') of said rear wall in an extension leading from or from a point spaced apart from the first side edge (10') towards or as far as the second side edge (12'), in particular by means of a continuous longitudinal weld (40').

8. The plastic bag (1) according to any one of Claims 5 to 7, **characterized in that** the seam (38) of the front wall (6) is configured to be double-layered or multi-layered as a continuation portion (42) of the front wall (6) by means of one or more folds, and/or the seam (38') of the rear wall (8) is configured to be double-layered or multi-layered as a continuation portion (42') of the rear wall (8) by means of one or more folds.

9. The plastic bag (1) according to any one of the preceding claims, further comprising at least one holding strap (44, 44') connected to the front wall (6) and/or at least one holding strap (44, 44') connected to the rear wall (8), each having a first (46, 46') and a second connecting region (48, 48'), in particular wherein the holding strap (44, 44') connected to the front wall (6) and the holding strap (44, 44') connected to the rear wall (8) are welded and/or adhesively bonded in the particular first (46, 46') and second connecting regions (48, 48') in the region of the seam (38, 38') of the front (6) and/or rear wall (8).

10. The plastic bag (1) according to Claim 9, **characterized in that**
the holding strap (44) connected to the front wall (6) by the first (46) and second connecting regions (48) thereof and/or the holding strap (44') connected to the rear wall (8) by the first (46') and second connecting regions (48') thereof comprise(s), at least in portions in the region from the particular first (46, 46') to the particular second connecting region (48, 48'), a first flexible tubular hollow body or a single-layered or multi-layered material strip, in particular plastic material strip, that does not form a hollow body and is surrounded in portions or substantially entirely by a second flexible tubular hollow body.

11. The plastic bag (1) according to any one of the preceding claims, **characterized in that**
the at least one plastic film layer (24, 24') is connected, in particular by means of welding, at least in portions to the first side edge (10, 10') and/or the second side edge (12, 12').

12. The plastic bag (1) according to any one of the preceding claims, **characterized in that**
the front wall (6) and the rear wall (8) comprise, in particular triangular, cut-outs (50, 50', 52, 52') at the transition from the bottom edges (16, 16') to the bag edges (18, 20) thereof.

13. The plastic bag (1) according to any one of the preceding claims, **characterized in that**
the at least one plastic film layer (24) has, in the direction from the bottom edge (16) to the opening edge (14) of the front wall (6), an extension which corresponds to 30 to 80%, in particular 40 to 60%, of the extension of the front wall (6) from the bottom edge (16) to the opening edge (14), and/or the at least one plastic film layer (24') has, in the direction from the bottom edge (16') to the opening edge (14') of the rear wall (8), an extension which corresponds to 30 to 80%, in particular 40 to 60%, of the extension of the rear wall (8) from the bottom edge (16') to the opening edge (14').

14. The plastic bag (1) according to any one of Claims 2 to 13, **characterized in that** the base-side opening of the internal bag inserts (30, 32, 34) has a spacing from the bag base (2) corresponding to 5 to 30%, in particular 10 to 20%, of the extension of the front wall (6) and/or rear wall (8) from the bottom edge (16, 16') to the opening edge (14, 14').

15. The plastic bag (1) according to any one of the preceding claims, **characterized in that**
the at least one plastic film layer (24) has, in the direction from the first (10) to the second side edge (12) of the front wall (6), an extension which corresponds to the extension of the front wall (6) from the first (10) to the second side edge (12), and/or the at least one plastic film layer (24') has, in the direction from the first (10') to the second side edge (12') of the rear wall (8), an extension which corresponds to the extension of the rear wall (8) from the first (10') to the second side edge (12').

16. The plastic bag (1) according to any one of the preceding claims, **characterized in that**
the front wall (6) and/or the rear wall (8) and/or the at least one plastic film layer (24, 24') and/or optionally the side walls (11, 13) of the plastic bag (1) and/or of the bag base (2) and/or the seam (38, 38') of the front (6) and/or rear wall (8) and/or the holding straps (44, 44') are substantially based on or manufactured from thermoplastic materials, preferably polyolefins, particularly preferably polyethylene, in particular LD polyethylene, and/or polyester.

17. The plastic bag (1) according to any one of the preceding claims, **characterized in that**
it substantially consists of or comprises recyclable material.

18. The plastic bag (1) according to any one of Claims 1 to 8, **characterized in that** it is formed substantially in one piece.

19. The plastic bag (1) according to any of the preceding Claims, **characterized in that** the plastic film layer (24) of the front wall (6) extends from the first side edge (10) as far as the opposite second side edge (12),
wherein the spacing between the first side edge (10) and the weld or adhesive area (54), in particular in the form of a weld seam, which is arranged adjacently to said first side edge (10), is smaller than the spacing of at least one pair, in particular all pairs, of adjacent weld or adhesive areas (54, 26; 26, 28; 28, 56), and/or, in particular and,
wherein the spacing between the second side edge (12) and the weld or adhesive area (56), in particular in the form of a weld seam, which is arranged adjacently to said second side edge (12), is smaller than the spacing of at least one pair, in particular all pairs, of adjacent weld or adhesive areas (54, 26; 26, 28; 28, 56), and/or, in particular and, **in that**
the plastic film layer (24') of the rear wall (8) extends from the first side edge (10') as far as the opposite second side edge (12'),
wherein the spacing between the first side edge (10') and the weld or adhesive area (54'), in particular in the form of a weld seam, which is arranged adjacently to said first side edge (10'), is smaller than the spacing of at least one pair, in particular all pairs, of adjacent weld or adhesive areas (54', 26'; 26', 28'; 28', 56'), and/or, in particular and,
wherein the spacing between the second side edge (12') and the weld or adhesive area (56'), in particular in the form of a weld seam, which is arranged adjacently to said second side edge (12'), is smaller than the spacing of at least one pair, in particular all pairs, of adjacent weld or adhesive areas (54', 26'; 26', 28'; 28', 56').

20. The plastic bag (1) according to any one of Claims 1 to 18, **characterized in that** the plastic film layer (24) of the front wall (6) extends from or from a point spaced apart from, in particular from a point spaced apart from, the first side edge (10) towards, but not as far as, the opposite second side edge (12),
wherein the spacing between the first side edge (10) and the weld or adhesive area (54), in particular in the form of a weld seam, which is arranged adjacently to said first side edge (10), is smaller than the spacing of at least one pair, in particular all pairs, of adjacent weld or adhesive areas (54, 26; 26, 28; 28, 56), and/or, in particular and,
wherein the spacing between the second side edge (12) and the weld or adhesive area (56), in particular in the form of a weld seam, which is arranged adjacently to said second side edge (12), is smaller than the spacing of at least one pair, in particular all pairs, of adjacent weld or adhesive areas (54, 26; 26, 28; 28, 56). and/or, in particular and, **in that**
the plastic film layer (24') of the rear wall (8) extends from a point spaced apart from the first side edge (10') towards, but not as far as, the opposite second side edge (12'),
wherein the spacing between the first side edge (10') and the weld or adhesive area (54'), in particular in the form of a weld seam, which is arranged adjacently to said first side edge (10'), is smaller than the spacing of at least one pair, in particular all pairs, of adjacent weld or adhesive areas (54', 26'; 26', 28'; 28', 56'), and/or, in particular and,
wherein the spacing between the second side edge (12') and the weld or adhesive area (56'), in particular in the form of a weld seam, which is arranged adjacently to said second side edge (12'), is smaller than the spacing of at least one pair, in particular all pairs, of adjacent weld or adhesive areas (54', 26'; 26', 28'; 28', 56').

21. The plastic bag (1) according to Claim 19 or 20, **characterized in that**
in relation to the front wall (6), the spacing between the first side edge (10) and the weld or adhesive area (54), in particular in the form of a weld seam, which is arranged adjacently to said first side edge (10), is at most 75%, in particular at most 50%, of the spacing of at least one pair of adjacent weld or adhesive areas (54, 26; 26, 28; 28, 56), in particular of the spacing of the pair of adjacent weld or adhesive areas (54, 26; 26, 28; 28, 56) that has the smallest relative spacing from among the pairs of adjacent weld or adhesive areas (54, 26; 26, 28; 28, 56),
and/or, in particular and, **in that**
in relation to the front wall (6), the spacing between the second side edge (12) and the weld or adhesive area (56), in particular in the form of a weld seam, which is arranged adjacently to said second side edge (12), is at most 75%, in particular at most 50%, of the spacing of at least one pair of adjacent weld or adhesive areas (54, 26; 26, 28; 28, 56), in particular of the spacing of the pair of adjacent weld or adhesive areas (54, 26; 26, 28; 28, 56) that has the smallest relative spacing from among the pairs of adjacent weld or adhesive areas (54, 26; 26, 28; 28, 56).

22. The plastic bag (1) according to any one of Claims 19 to 21, **characterized in that** in relation to the rear wall (8), the spacing between the first side edge (10') and the weld or adhesive area (54'), in particular in the form of a weld seam, which is arranged adjacently to said first side edge (10'), is at most 75%, in particular at most 50%, of the spacing of at least one pair of adjacent weld or adhesive areas (54', 26'; 26', 28'; 28', 56'), in particular of the spacing of the pair of adjacent weld or adhesive areas (54', 26'; 26', 28'; 28', 56') that has the smallest relative spacing from among the pairs of adjacent weld or adhesive areas (54', 26'; 26', 28'; 28', 56'),
and/or, in particular and, **in that**
in relation to the rear wall (8), the spacing between the second side edge (12') and the weld or adhesive area (56'), in particular in the form of a weld seam, which is arranged adjacently to said second side edge (12'), is at most 75%, in particular at most 50%, of the spacing of at least one pair of adjacent weld or adhesive areas (54', 26'; 26', 28'; 28', 56'), in particular of the spacing of the pair of adjacent weld or adhesive areas (54', 26'; 26', 28'; 28', 56') that has the smallest relative spacing from among the pairs of adjacent weld or adhesive areas (54', 26'; 26', 28'; 28', 56').

23. The plastic bag (1) according to any one of the preceding claims, **characterized in that**
in relation to the front wall (6), the spacing of at least two pairs, in particular all pairs, of adjacent weld or adhesive areas (54, 26; 26, 28; 28, 56), in particular in the form of weld seams, is substantially the same, and/or **in that**
in relation to the rear wall (8), the spacing of at least two pairs, in particular all pairs, of adjacent weld or adhesive areas (54', 26'; 26', 28'; 28', 56'), in particular in the form of weld seams, is substantially the same.

24. The plastic bag (1) according to any one of the preceding claims, **characterized in that**
the front wall (6) is double-layered, and/or, in particular and, the rear wall (8) is double-layered.

25. The plastic bag (1) according to Claim 24, **characterized in that**
the plastic film layer (24) is connected only to the inside layer of the multi-layered front wall (6) by the weld areas (54, 26; 26, 28; 28, 56) the form of weld seams, and/or, in particular and, **in that**
the plastic film layer (24') is connected only to the inside layer of the multi-layered rear wall (8) by the weld areas (54', 26'; 26', 28'; 28', 56') in the form of weld seams.

26. The plastic bag (1) according to any one of the preceding claims, **characterized in that**
the plastic film layer (24, 24') of the front wall (6) and/or, in particular and, of the rear wall (8) comprise(s) or are/is formed from LD polyethylene, and/or, in particular and, **in that**
the plastic film layer (24, 24') of the front wall (6) and/or, in particular and, of the rear wall (8) have/has an average, in particular absolute, thickness in the range of 30 to 80 µm, in particular in the range of 35 to 60 µm.

27. Use of the plastic bag (1) according to any one of the preceding claims for transporting beverage bottles, in particular beverage bottles having a volume of up to 2 liters.

## Revendications

1. Sac en plastique (1) avec un fond de sac (2) et une ouverture de sac opposée (4), comprenant
une paroi avant (6) et une paroi arrière (8), respectivement avec un premier bord latéral (10, 10') et un second bord latéral opposé (12, 12') ainsi qu'un bord d'ouverture (14,14') et un bord de fond (16, 16'),
dans lequel la paroi avant (6) et la paroi arrière (8) sont, au niveau de leurs premiers (10, 10') et seconds (12, 12') bords latéraux et de leurs bords de fond (16, 16'), reliées l'une à l'autre au moins par sections, en particulier à l'aide d'une soudure, en formant des premiers (18) et seconds bords de sac (20) opposés ainsi d'un bord de fond de sac (22), dans lequel la paroi avant (6) et/ou la paroi arrière (8) présente(nt) du côté intérieur au moins une couche de feuilles en matière plastique (24, 24') qui s'étend depuis le premier bord latéral (10,10') ou à distance de celui-ci en direction du second bord opposé (12,12') ou jusqu'à celui-ci ainsi que depuis le bord de fond (16,16') ou à distance du bord de fond (16,16') en direction du bord d'ouverture (14, 14') ou jusqu'à celui-ci,
dans lequel la couche de feuilles en matière plastique (24, 24') de la paroi avant (6) et/ou de la paroi arrière (8) est reliée au moins par sections au côté intérieur de la paroi avant (6) respectivement de la paroi arrière (8), par au moins deux, en particulier trois ou quatre, surfaces de soudure ou de colle (26, 26', 28, 28'), en particulier des cordons de soudure, qui s'étendent à chaque fois à distance les un(e)s des autres, en particulier sensiblement parallèlement, et qui s'étendent à distance du bord de fond (16, 16') en direction du bord d'ouverture (14, 14') ou jusqu'à celui-ci en formant des compartiments de sac (30, 32, 34) ouverts vers l'ouverture de sac (4), à chaque fois conçus et agencé pour y loger une ou plusieurs bouteilles pour boisson,
**caractérisé en ce que**
la paroi avant (6) est conçue avec plusieurs couches et **en ce que** la couche de feuilles en matière plastique (24) est reliée, par des surfaces de soudure ou de colle (54, 26 ; 26, 28 ; 28, 56), exclusivement à la couche intérieure de la paroi avant (6) à plusieurs couches et/ou
**en ce que** la paroi arrière (8) est conçue avec plusieurs couches et **en ce que** la couche de feuilles en matière plastique (24') est reliée, par des surfaces de soudure ou de colle (54', 26' ; 26', 28' ; 28', 56'), exclusivement à la couche intérieure de la paroi arrière (8) à plusieurs couches.

2. Sac en plastique (1) selon la revendication 1, **caractérisé en ce que** les compartiments de sac (30, 32, 34) sont ouverts vers le fond de sac (2).

3. Sac en plastique (1) selon la revendication 1 ou 2, **caractérisé en ce que** la paroi avant (6) et la paroi arrière (8) sont reliées l'une à l'autre le long de leurs premiers bords latéraux (10,10') par une première paroi latérale (11) et/ou **en ce que** la paroi avant (6) et la paroi arrière (8) sont reliées l'une à l'autre le long de leurs seconds bords latéraux (12, 12') par une seconde paroi latérale (13).

4. Sac en plastique (1) selon une des revendications précédentes, **caractérisé en ce que** le fond de sac (2) présente un pli de fond (36), dans lequel depuis le pli de fond (36) jusqu'à la paroi avant (6) s'étend une première section de pli de fond et dans lequel depuis le pli de fond (36) jusqu'à la paroi arrière (8) s'étend une seconde section de pli de fond.

5. Sac en plastique (1) selon une des revendications précédentes, **caractérisé en ce que** la paroi avant (6) et/ou la paroi arrière (8), en particulier la paroi avant (6) et la paroi arrière (8), présentent au moins par sections un ourlet (38, 38') au niveau des bords d'ouverture (14, 14') du côté intérieur et/ou extérieur, en particulier du côté intérieur.

6. Sac en plastique (1) selon la revendication 5, **caractérisé en ce que** l'ourlet (38) de la paroi avant (6) et/ou l'ourlet (38') de la paroi arrière (8) s'étend(ent) depuis le premier bord latéral (10,10') de la paroi avant (6) respectivement de la paroi arrière (8) jusqu'au second bord latéral opposé (12, 12') de la paroi avant (6) respectivement de la paroi arrière (8).

7. Sac en plastique (1) selon la revendication 5 ou 6, **caractérisé en ce que** l'ourlet (38) de la paroi avant (6) est relié, en particulier soudé et/ou collé, en particulier avec une soudure longitudinale continue (40), à la paroi avant (6) à distance de son bord d'ouverture (14) le long d'une extension depuis le premier bord latéral (10) ou à distance de celui-ci en direction du second bord latéral (12) ou jusqu'à celui-ci et/ou **en ce que** l'ourlet (38') de la paroi arrière (8) est relié, en particulier soudé et/ou collé, en particulier avec une soudure longitudinale continue (40'), à la paroi arrière (8) à distance de son bord d'ouverture (14') le long d'une extension depuis le premier bord latéral bord latéral (10') ou à distance de celui-ci en direction du second bord latéral (12') ou jusqu'à celui-ci.

8. Sac en plastique (1) selon une des revendications 5 à 7, **caractérisé en ce que** l'ourlet (38) de la paroi avant (6) est conçu avec deux respectivement plusieurs couches sous la forme d'une section de prolongement (42) de la paroi avant (6) à l'aide d'un rabat réalisé en une ou plusieurs fois et/ou **en ce que** l'ourlet (38') de la paroi arrière (8) est conçu avec deux respectivement plusieurs couches sous la forme d'une section de prolongement (42') de la paroi arrière (8) à l'aide d'un rabat réalisé en une ou plusieurs fois.

9. Sac en plastique (1) selon une des revendications précédentes, comprenant en outre au moins une sangle (44) reliée à la paroi avant (6) et/ou au moins une sangle (44') reliée à la paroi arrière (8) avec respectivement une première (46, 46') et une seconde zone de liaison (48, 48'), en particulier dans lequel la sangle (44) reliée à la paroi avant (6) et la sangle (44') reliée à la paroi arrière (8) sont soudées et/ou collées à chaque fois dans leurs premières (46, 46') et secondes zones de liaison (48, 48') au niveau de l'ourlet (38, 38') de la paroi avant (6) et/ou arrière (8).

10. Sac en plastique (1) selon la revendication 9, **caractérisé en ce que** la sangle (44) reliée à la paroi avant (6) par de ses premières (46) et secondes zones de liaison (48) et/ou la sangle (44') reliée à la paroi arrière (8) par ses premières (46') et secondes zones de liaison (48') présente(nt) au niveau de la première zone de liaison respective (46, 46') jusqu'à la seconde zone de liaison (48, 48') au moins par sections un premier corps creux en forme de tuyau flexible ou une bande de matériau avec une ou plusieurs couches et ne formant pas un corps creux, en particulier une bande de matériau en matière plastique, qui est recouvert(e) par sections ou sensiblement complètement par un second corps creux en forme de tuyau flexible.

11. Sac en plastique (1) selon une des revendications précédentes, **caractérisé en ce que** l'au moins une couche de feuilles en matière plastique (24, 24') est reliée, au moins par sections, au premier bord latéral (10, 10') et/ou au second bord latéral (12, 12'), en particulier à l'aide d'une soudure.

12. Sac en plastique (1) selon une des revendications précédentes, **caractérisé en ce que** la paroi avant (6) et la paroi arrière (8) présentent des évidements (50, 50', 52, 52'), en particulier triangulaires, à la jonction de leurs bords de fond (16,16') vers les bords de sac (18, 20).

13. Sac en plastique (1) selon une des revendications précédentes, **caractérisé en ce que** l'au moins une couche de feuilles en matière plastique (24) présente en direction du bord de fond (16) vers le bord d'ouverture (14) de la paroi avant (6) une extension qui correspond à 30 à 80 %, en particulier 40 à 60 %, de l'extension de la paroi avant (6) depuis le bord de fond (16) vers le bord d'ouverture (14), et/ou **en ce que** l'au moins une couche de feuilles en matière plastique (24') présente en direction du bord de fond (16') vers le bord d'ouverture (14') de la paroi arrière (8) une extension qui correspond à 30 à 80 %, en particulier 40 à 60 %, de l'extension de la paroi arrière (8) depuis le bord de fond (16') vers le bord d'ouverture (14').

14. Sac en plastique (1) selon une des revendications 2 bis 13, **caractérisé en ce que** l'ouverture du côté du fond des compartiments de sac (30, 32, 34) présente une distance jusqu'au fond de sac (2) qui correspond à 5 à 30 %, en particulier 10 à 20 %, de l'extension de la paroi avant (6) et/ou paroi arrière (8) depuis le bord de fond (16, 16') vers le bord d'ouverture (14, 14').

15. Sac en plastique (1) selon une des revendications précédentes, **caractérisé en ce que** l'au moins une couche de feuilles en matière plastique (24) présente, en direction du premier (10) jusqu'au second bord latéral (12) de la paroi avant (6), une extension qui correspond à l'extension de la paroi avant (6) depuis le premier (10) jusqu'au second bord latéral (12), et/ou **en ce que** l'au moins une couche de feuilles en matière plastique (24') présente, en direction du premier (10') jusqu'au second bord latéral (12') de la paroi arrière (8), une extension qui correspond à l'extension de la paroi arrière (8) depuis le premier (10') jusqu'au second bord latéral (12').

16. Sac en plastique (1) selon une des revendications précédentes, **caractérisé en ce que** la paroi avant (6) et/ou la paroi arrière (8) et/ou l'au moins une couche de feuilles en matière plastique (24, 24') et/ou le cas échéant les parois latérales (11, 13) du sac en plastique (1) et/ou le fond de sac (2) et/ou l'ourlet (38, 38') de la paroi avant (6) et/ou paroi arrière (8) et/ou les sangles (44, 44'), sont basées sensiblement sur des matières plastiques thermoplastiques, de préférence des polyoléfines, en particulier de préférence des polyéthylènes, en particulier des polyéthylènes basse densité, et/ou polyesters, ou fabriquées à partir de ceux-ci.

17. Sac en plastique (1) selon une des revendications précédentes, **caractérisé en ce que** celui-ci est sensiblement composé à partir de matériau recyclable ou comprend celui-ci.

18. Sac en plastique (1) selon une des revendications 1 à 8, **caractérisé en ce que** celui-ci est formé sensiblement d'un seul tenant.

19. Sac en plastique (1) selon une des revendications précédentes, **caractérisé en ce que** la couche de feuilles en matière plastique (24) de la paroi avant (6) s'étend depuis le premier bord latéral (10) jusqu'au second bord latéral opposé (12),
dans lequel la distance de la surface de soudure ou de colle (54), en particulier sous la forme d'un cordon de soudure, qui est disposé(e) de manière adjacente au premier bord latéral (10), jusqu'à ce premier bord latéral (10) est inférieure à la distance d'au moins une paire, en particulier de toutes les paires, de surfaces de soudure ou de colle adjacentes entre elles (54, 26 ; 26, 28 ; 28, 56) et/ou, en particulier et,
dans lequel la distance de la surface de soudure ou de colle (56), en particulier sous la forme d'un cordon de soudure, qui est disposé(e) de manière adjacente au second bord latéral (12), jusqu'à ce second bord latéral (12) est inférieure à la distance d'au moins une paire, en particulier de toutes les paires, de surfaces de soudure ou de colle adjacentes entre elles (54, 26 ; 26, 28 ; 28, 56) et/ou, en particulier et, **en ce que**
la couche de feuilles en matière plastique (24') de la paroi arrière (8) s'étend depuis le premier bord latéral (10') jusqu'au second bord latéral opposé (12'),
dans lequel la distance de la surface de soudure ou de colle (54'), en particulier sous la forme d'un cordon de soudure, qui est disposé(e) de manière adjacente au premier bord latéral (10'), jusqu'à ce premier bord latéral (10') est inférieure à la distance d'au moins une paire, en particulier de toutes les paires, de surfaces de soudure ou de colle adjacentes entre elles (54', 26' ; 26', 28'; 28', 56') et/ou, en particulier et,
dans lequel la distance de la surface de soudure ou de colle (56'), en particulier sous la forme d'un cordon de soudure, qui est disposé(e) de manière adjacente au second bord latéral (12'), jusqu'à ce second bord latéral (12') est inférieure à la distance d'au moins une paire, en particulier de toutes les paires, de surfaces de soudure ou de colle adjacentes entre elles (54', 26' ; 26', 28' ; 28', 56').

20. Sac en plastique (1) selon une des revendications 1 à 18, **caractérisé en ce que** la couche de feuilles en matière plastique (24) de la paroi avant (6) s'étend depuis le premier bord latéral (10) ou à distance de celui-ci, en particulier à distance de celui-ci, en direction du second bord latéral opposé (12) mais pas jusqu'à celui-ci, dans lequel la distance de la surface de soudure ou de colle (54), en particulier sous la forme d'un cordon de soudure, qui est disposé(e) de manière adjacente au premier bord latéral (10), jusqu'à ce premier bord latéral (10) est inférieure à la distance d'au moins une paire, en particulier de toutes les paires, de surfaces de soudure ou de colle adjacentes entre elles (54, 26 ; 26, 28 ; 28, 56) et/ou, en particulier et,
dans lequel la distance de la surface de soudure ou de colle (56), en particulier sous la forme d'un cordon de soudure, qui est disposé(e) de manière adjacente au second bord latéral (12), jusqu'à ce second bord latéral (12) est inférieure à la distance d'au moins une paire, en particulier de toutes les paires, de surfaces de soudure ou de colle adjacentes entre elles (54, 26 ; 26, 28 ; 28, 56)
et/ou, en particulier et, **en ce que**
la couche de feuilles en matière plastique (24') de la paroi arrière (8) s'étend à distance du premier bord latéral (10') en direction du second bord latéral opposé (12') mais pas jusqu'à celui-ci
dans lequel la distance de la surface de soudure ou de colle (54'), en particulier sous la forme d'un cordon de soudure, qui est disposé(e) de manière adjacente au premier bord latéral (10'), jusqu'à ce premier bord latéral (10') est inférieure à la distance d'au moins une paire, en particulier de toutes les paires, de surfaces de soudure ou de colle adjacentes entre elles (54', 26' ; 26', 28' ; 28', 56') et/ou, en particulier et,
dans lequel la distance de la surface de soudure ou de colle (56'), en particulier sous la forme d'un cordon de soudure, qui est disposé(e) de manière adjacente au second bord latéral (12'), jusqu'à ce second bord latéral (12') est inférieure à la distance d'au moins une paire, en particulier de toutes les paires, de surfaces de soudure ou de colle adjacentes entre elles (54', 26' ; 26', 28' ; 28', 56').

21. Sac en plastique (1) selon la revendication 19 ou 20, **caractérisé en ce que**, par rapport à la paroi avant (6), la distance de la surface de soudure ou de colle (54), en particulier sous la forme d'un cordon de soudure, qui est disposé(e) de manière adjacente au premier bord latéral (10), jusqu'à ce premier bord latéral (10) représente au maximum 75 %, en particulier au maximum 50 %, de la distance d'au moins une paire de surfaces de soudure ou de colle adjacentes entre elles (54, 26 ; 26, 28 ; 28, 56), en particulier de la distance de la paire respective de surfaces de soudure ou de colle adjacentes entre elles (54, 26 ; 26, 28 ; 28, 56) qui présente la plus petite distance les unes des autres parmi les paires de surfaces de soudure ou de colle adjacentes entre elles (54, 26 ; 26, 28 ; 28, 56),
et/ou, en particulier et, **en ce que**,
par rapport à la paroi avant (6), la distance de la surface de soudure ou de colle (56), en particulier sous la forme d'un cordon de soudure, qui est disposé(e) de manière adjacente au second bord latéral (12), jusqu'à ce second bord latéral (12) représente au maximum 75 %, en particulier au maximum 50 %, de la distance d'au moins une paire de surfaces de soudure ou de colle adjacentes entre elles (54, 26 ; 26, 28 ; 28, 56), en particulier de la distance de la paire respective de surfaces de soudure ou de colle adjacentes entre elles (54, 26 ; 26, 28 ; 28, 56), qui présente la plus petite distance les unes des autres parmi les paires de surfaces de soudure ou de colle adjacentes entre elles (54, 26 ; 26, 28 ; 28, 56).

22. Sac en plastique (1) selon une des revendications 19 à 21, **caractérisé en ce que**, par rapport à la paroi arrière (8), la distance de la surface de soudure ou de colle (54'), en particulier sous la forme d'un cordon de soudure, qui est disposé(e) de manière adjacente au premier bord latéral (10'), jusqu'à ce premier bord latéral (10') représente au maximum 75 %, en particulier au maximum 50 %, de la distance d'au moins une paire de surfaces de soudure ou de colle adjacentes entre elles (54', 26' ; 26', 28' ; 28', 56'), en particulier de la distance de la paire respective de surfaces de soudure ou de colle adjacentes entre elles (54', 26' ; 26', 28' ; 28', 56'), qui présente la plus petite distance les unes des autres parmi les paires de surfaces de soudure ou de colle adjacentes entre elles (54', 26' ; 26', 28' ; 28', 56')
et/ou, en particulier et, **en ce que**,
par rapport à la paroi arrière (8), la distance de la surface de soudure ou de colle (56'), en particulier sous la forme d'un cordon de soudure, qui est disposé(e) de manière adjacente au second bord latéral (12'), jusqu'à ce second bord latéral (12') représente au maximum 75 %, en particulier au maximum 50 %, de la distance d'au moins une paire de surfaces de soudure ou de colle adjacentes entre elles (54', 26' ; 26', 28'; 28', 56'), en particulier de la distance de la paire respective de surfaces de soudure ou de colle adjacentes entre elles (54', 26' ; 26', 28' ; 28', 56'), qui présente la plus petite distance les unes des autres parmi les paires de surfaces de soudure ou de colle adjacentes entre elles (54', 26' ; 26', 28' ; 28', 56').

23. Sac en plastique (1) selon une des revendications précédentes, **caractérisé en ce que**, par rapport à la paroi avant (6), la distance d'au moins deux paires, en particulier de toutes les paires, de surfaces de soudure ou de colle adjacentes entre elles (54, 26 ; 26, 28 ; 28, 56), en particulier sous forme de cordons de soudure, coïncide coïncide sensiblement et/ou **en ce que**,
par rapport à la paroi arrière (8), la distance d'au moins deux paires, en particulier de toutes les paires, de surfaces de soudure ou de colle adjacentes entre elles (54', 26' ; 26', 28' ; 28', 56'), en particulier sous forme de cordons de soudure, coïncide sensiblement.

24. Sac en plastique (1) selon une des revendications précédentes, **caractérisé en ce que** la paroi avant (6) est conçue avec deux couches, et/ou, en particulier et, **en ce que** la paroi arrière (8) est conçue avec deux couches.

25. Sac en plastique (1) selon la revendication 24, **caractérisé en ce que**
la couche de feuilles en matière plastique (24) est, par des surfaces de soudure ou de colle (54, 26 ; 26, 28 ; 28, 56), sous forme de cordons de soudure reliée exclusivement à la couche intérieure de la paroi avant à plusieurs couches (6) et/ou, en particulier et, **en ce que**
la couche de feuilles en matière plastique (24') est, par le des surfaces de soudure ou de colle (54', 26' ; 26', 28' ; 28', 56'), en particulier sous forme de cordons de soudure, reliée exclusivement à la couche intérieure de la paroi arrière (8) à plusieurs couches.

26. Sac en plastique (1) selon une des revendications précédentes, **caractérisé en ce que** la couche de feuilles en matière plastique (24, 24') de la paroi avant (6) et/ou, en particulier et, de la paroi arrière (8), comprend du polyéthylène basse densité ou est formé à partir de celui-ci et/ou, en particulier et, **en ce que**
la couche de feuilles en matière plastique (24, 24') de la paroi avant (6) et/ou, en particulier et, de la paroi arrière (8), présente une épaisseur moyenne, en particulier absolue, comprise dans la plage de 30 à 80 µm, en particulier dans la plage de 35 à 60 µm.

27. Utilisation du sac en plastique (1) selon une des revendications précédentes pour le transport de bouteilles pour boisson, en particulier de bouteilles pour boisson avec une contenance allant jusqu'à 2 litres.
